Europäisches Patentamt

European Patent Office

Office européen des brevets

(11) Publication number: **0 144 569**
**B1**

(12) **EUROPEAN PATENT SPECIFICATION**

(45) Date of publication of patent specification: **23.01.91**

(51) Int. Cl.⁵: **H 01 M 2/04,** B 29 C 65/20 //
B29L22:00

(21) Application number: **84110895.4**

(22) Date of filing: **21.10.80**

(80) Publication number of the earlier application in accordance with Art. 76 EPC: **0 028 116**

(54) Battery case welding apparatus.

(30) Priority: **22.10.79 US 87149**
**08.02.80 US 119972**
**28.03.80 US 135117**

(43) Date of publication of application:
**19.06.85 Bulletin 85/25**

(45) Publication of the grant of the patent:
**23.01.91 Bulletin 91/04**

(84) Designated Contracting States:
**AT BE CH DE FR GB IT LI LU NL SE**

(56) References cited:
DE-A-2 510 258     US-A-3 627 617
DE-A-2 637 239     US-A-3 686 056
FR-A-2 078 436     US-A-3 745 635
FR-A-2 393 666     US-A-3 765 951
GB-A- 938 249      US-A-3 883 369
US-A-2 972 371     US-A-3 933 571

(73) Proprietor: **HARDIGG INDUSTRIES, INCORPORATED**
**South Deerfield Massachusetts 01373 (US)**

(72) Inventor: **Hardigg, James Sutton**
**Baptist Hill**
**Conway Massachusetts 01341 (US)**
Inventor: **Strzegowski, Joseph Chester, Jr.**
**Reeds Bridge Road**
**Conway Massachusetts, 01341 (US)**
Inventor: **Burgess, Asial L., Jr.**
**706 Fuller Street**
**Ludlow Massachusetts, 01056 (US)**
Inventor: **Neal, David B.**
**12 White Pine Drive**
**Northampton Massachusetts, 1060 (US)**

(74) Representative: **Knowles, Audrey Elizabeth**
**624 Pershore Road**
**Selly Park Birmingham B29 7HG (GB)**

Courier Press, Leamington Spa, England.

# EP 0 144 569 B1

**Description**

This invention relates to battery case welding apparatus for welding a battery cover onto a battery jar.

A storage battery includes an outer jar of suitable non-current conducting and acid resisting material into which conventional battery elements and terminal posts are placed and which is closed by the cover described herein. The welding of this cover to battery jars is accomplished in a more efficient and effective manner by the improved method and apparatus disclosed herein and made possible by this cover structure.

It is desirable when preparing a battery jar structure that the cover be effectively sealed around its periphery to the top of the battery jar so that notwithstanding service conditions, including temperature extremes, vibrations, or other environmental conditions, the seal between the cover and the rim of the battery jar remain intact. Thus, a substantially permanent, hermetic seal is desired which is acid proof and which can resist at least the above service conditions, while at the same time providing strength at the joint.

It is also desirable, to the extent possible, to automate the process of welding battery jar covers onto battery jars. One difficulty in this regard, is created by the fact that the battery jars have electrodes in place so that their terminal posts extend upwardly beyond the plane established by the upper rim of the battery. Battery covers have been glued or sealed onto battery jars by means of epoxy adhesives or by ultrasonic welding. In many cases the ultrasonic process is not capable of producing a hermetically sealed container at the point of the weld especially where there are thick or complicated tongue and groove type joints since such structures are believed difficult to penetrate with the ultrasonic waves. Thus, acid leads can occur at points along the weld or from poorly secured areas where the thickness to be penetrated was too great to provide a completely solid weld. Ultrasonic welding requires the material be relatively stiff and works best where the ultrasonic electrodes can be on opposite sides of the work piece. Accordingly use along corner structures, as would be required when welding battery covers onto battery jars, provides a difficult set of conditions which would have to be overcome in order to produce a good weld. Likewise, glueing procedures do not always result in a continuous hermetically sealed joint around the entire structure and in some cases requires the cover to be turned upside down so that glue can be placed in the groove into which the battery jar rim is ultimately placed after the whole jar has been inverted.

Further, in many bonding techniques currently in use the cover must be lifted entirely off of the battery jar and away from the terminals so that a heating platen, provided with a central cut out portion capable of fitting over the terminals, can be brought in and lowered into position to heat the joint even. After melting the heater is removed and the cover is finally brought back in place where it is held until the jar area is cooled. The time lag in such procedures is relatively long and some cooling and oxidizing of the plastic can occur, which is undesirable.

Further as the sidewalls of battery jars become increasingly thinner, there is a greater likelihood that the jar's sidewalls will bow inwardly and this problem becomes compounded as the size of the battery jar increases. Thus, the problems of automating battery production would seem to be further compounded.

Prior art apparatus for welding battery covers onto battery jars have solved the problem of how to weld around terminal posts which extend upwardly beyond the plane established by the rim of the battery jar by employing one piece heating elements shaped to be equal to the size of the periphery of the jar rim of a particular jar on which a cover is being welded. Such heating elements have either had a hollow interior or were provided with properly positioned holes through which the terminal posts could extend. Such heating elements were usually fed horizontally from along side the welding area after the cover had been lifted completely off of the battery jar and out of engagement with the terminal posts. Following the insertion of the one piece heating platen from the side, the platen and the cover would again be lowered over the terminal posts and back onto the jar with the platen now occupying a position between the upper edge of the jar and the bottom of the cover. Following heating, the battery cover would again be lifted completely off and away from the battery jar and the terminal posts so that the heating platen could be raised away from the jar and above the tops of the terminal posts after which it could be withdrawn horizontally with the cover being lowered thereafter into place so that the welding process could be completed.

The complete removal of the battery cover from the battery jar and its subsequent travel back and forth during heating and welding to allow for the insertion and removal of the heating platen complicates the welding process in a number of ways not the least of which is that when the cover is removed the initial alignment provided by having the cover in the jar is lost and additional alignment problems can result. It should be kept in mind that as the sidewall thickness of battery jars decreases there is a tendency for such sidewalls to flex inwardly or outwardly and accordingly, at least to some extent, the cover helps stabilize and shape the sidewalls of the battery jar. When the cover is completely removed, it is possible for the sidewalls of the battery jar to become distorted so that during the heating process when the cover is not continuously in the jar, both the jar and the cover may be irregularly melted.

In addition, it is known that an oxidized surface can be formed on melted thermoplastic or plastic materials when exposed to air. Likewise, the heating of the plastic to its fusion temperature also tends to degrade the plastic adjacent the heating platen. Thus, the longer the melted surfaces remain exposed to the atmosphere the greater the problems associated therewith. Further, to produce clean and strong joints between the melted areas it is important to have clean non-degraded melted material within the joint.

Accordingly, by raising the cover and waiting while the platen is removed and moving the cover back into the jar, even assuming acceptable alignment is again obtained, the relatively long period of time that both the jar and cover have remained exposed increases the inevitability of having weld failures result due to the relatively long exposure times.

Also, since the platens were one piece elements, each could only be shaped or sized for one or a small grouping of battery sizes. While there are two relatively standard width sizes for battery jars there are a wide variety of lengths used in industry. Accordingly, each change from one size or one group to another required such machines to be out of service for relatively long periods while the platens were exchanged and the machine recalibrated.

Apparatus is known according to the prior art portion of Claim 1 from DE—A—2,637,239 in which the battery cover is held stationary and the battery jar is arranged for vertical movement relative to the cover both for direct heating of the opposed complementary welding surfaces on the cover and jar by heating means positioned therebetween and for bringing the heated welding surfaces together to effect the joint therebetween.

The heating means is provided by two opposed heating plates of L-shape arranged for horizontal and vertical movement with respect to the welding surfaces enabling the heating plates to be positioned between the welding surfaces without passing across the open top of the jar.

According to the present invention there is provided apparatus for welding a battery jar cover onto the rim portion of a battery jar wherein the cover has a guide structure engageable with the inner surface of the jar to locate the cover on the jar, the apparatus comprising a weld head assembly for moving the cover and jar relative to one another by an amount less than the length of the guide structure such that the engagement between the guide structure and the inner surface of the jar is maintained both for separating opposed complementary welding surfaces of the cover and jar for direct heating by heating means and for bringing the heated welding surfaces together to effect a joint therebetween characterised in that the weld head assembly comprises clamp means for engaging the sides of the jar and rail means for engaging the periphery of the top of the cover to maintain the alignment between the complementary welding surfaces and to apply pressure to the area of the joint between the heated welding surfaces.

The advantages offered by the invention are mainly that a strong and accurate joint is obtained by engagement of the clamp means and rail means with the jar and cover throughout the welding operation such that the alignment between the opposed welding surfaces is maintained and pressure is applied to the area of the joint.

In the preferred embodiment, the apparatus includes a main frame and is comprised of a deck area along which battery jars with their covers in place can be moved from a load station to weld and unload stations by a transfer carriage mechanism in a sequential manner. Positioned directly above the weld station is a vertically moving welding head. There is an initial adjustment that can be made to properly position the welding head for the height of jars to be processed and the welding head itself is initially raised or lowered to a correct welding height. Independent of that vertical adjustment, the welding head is under the control of two other raising and lowering drive systems. One moves the welding head to allow sufficient clearance for jars to be moved along the deck area beneath the weld head between welding cycles. During welding, the weld head itself is movable between a series of secondary raised and lowered positions to allow for insertion of separated heating bars as will be more fully described hereafter.

The weld head itself is comprised of a primary horizontal mounting plate on which four separate vertically oriented mounting plates are secured so that they can be moved toward and away from the central portion of that primary mounting plate. Two of those vertically oriented mounting plates are relatively long and of an equal length whereas the other two mounting plates are relatively short and are equal to the width dimension of the jars. Thus, the pair of short plates fit between the two longer mounting plates. As the length of battery jars varies, the two smaller plates can be moved inwardly or outwardly away from each other and toward or away from the center of the horizontal mounting plate a distance necessary to correspond to the new length dimension. When properly spaced they are again fixed in place and the longer sides are brought back into engagement with each of the shorter plates and processing can continue.

Each of these four vertical mounting plates supports a separate heating and clamping assembly. Each of the clamping assemblies is pivotally attached to the mounting plates whereas the heating assemblies are attached so that they can be both pivoted and moved vertically independently of the clamping assembly, the mounting plate of the welding head itself. The bottom of each of these vertical mounting plates is designed to receive a rail member which will be in a locked condition with the cover's periphery during welding. The heating and clamping areas of the heating and clamping assemblies are positioned beneath the rail member with the clamp bar of the clamp assembly being positioned below the heating bar of the heating assembly so that the heating member lies between the bottom of the rail and the top of the clamp. This arrangement allows the clamps to engage each sidewall of the jar and after the cover is locked in the rail members it can be lifted along the welding head a distance slightly greater than the thickness of the heater bar which can then be pivoted into a position between the cover and jar.

Battery jars with their elements and covers in place are sequentially loaded onto the deck at the load station and the transfer carriage will sequentially index a jar to the weld station directly beneath the welding head. Prior to the actuation of the transfer carriage assembly, the welding head is moved to its uppermost loading position which allows full clearance for battery jars to be moved thereunder. Once a jar

3

EP 0 144 569 B1

is in place the welding head is moved down into its operating position. The clamp drive means is actuated to substantially simultaneously bring each of the four clamps into an engagement with one of the sidewalls of the battery jar which finalizes alignment of the sidewalls with the cover and brings the cover and jar assembly into vertical alignment with the center line of the welding head. The clamps are attached to and moved with the welding head itself and, accordingly, the clamps remain engaged with the sidewalls throughout the remainder of the welding process. Once the clamps have been engaged the cover will be brought into an engagement against the rails which are located at the lower edges of the vertical mounting plates so that the cover itself will now also be moved together with the welding head and clamps and these will remain integrally locked together until the welding process has been completed. The welding head is slightly raised a distance which is just sufficient to allow the four separate heating members to be placed between the cover and the upper rim of the battery jar but not so great as to remove the cover from within the battery jar so that alignment between the cover and the jar's sidewalls is maintained. The heaters can be raised into an engagement with the cover or positioned to engage the cover and jar at about the same time or to contact the jar first. However, after the heaters are pivoted into position the welding head together with the heaters are lowered into the heating position where the heater contacts the cover and the jar. After a predetermined melt period during which heating occurs the movement of the weld head is reversed and as the heater blades are withdrawing the weld head is being lowered to bring the two melted areas into an engagement to complete the weld with the rail members applying pressure to the melted joint.

Through such a procedure it is possible to melt the appropriate areas of the battery cover and the battery jar and to bring these melted areas into an engagement extremely quickly and substantially simultaneously with the withdrawal of the heaters so that very little time has been spent exposed to the atmosphere.

Other objects, features, and advantages of the present invention will become fully apparent from the following description, given by way of example only, with reference to the accompanying drawings in which:—

FIGURE 1 is a top plan view of one illustrative embodiment of a battery cover;

FIGURE 2 is a bottom plan view of the cover shown in FIGURE 1;

FIGURE 3 is an end view of the cover shown in FIGURE 1;

FIGURE 4 is a cross-section taken along line 4—4 in FIGURE 2;

FIGURE 5 is a front elevational view of the preferred exemplary embodiment of the apparatus constructed according to the present invention;

FIGURE 6 is an elevational rearview of the preferred embodiment shown in FIGURE 5 with parts having been removed for clarity;

FIGURE 7 is a side elevational view of the preferred embodiment as shown in FIGURES 5 and 6 with portions having been cut away for clarity;

FIGURE 8 is an enlarged plan view of the deck and transfer carriage assemblies;

FIGURE 9 is an enlarged front elevational view of the welding head with portions having been omitted or cut away for clarity;

FIGURE 9A is a top plan view of the preferred embodiment of the device shown in FIGURE 5 with parts having been deleted for clarity;

FIGURE 10 is a diagrammatic view of the heating and clamping assemblies;

FIGURE 11 is an enlarged side elevational view of one of the heating and clamping assemblies;

FIGURE 12A is an enlarged front elevational view of the long heating and clamping assemblies;

FIGURE 12B is an enlarged front elevational view of the short heating and clamping assemblies;

FIGURE 13 is a partial detailed elevational view of the operative end of the cover pickup mechanism;

FIGURE 14 is a series of diagrammatic figures showing the operational sequence of the present invention;

FIGURE 15 shows a portion of the control circuit used to control the sequential operation of the present invention;

FIGURE 16 shows the input board connections used in the control system;

FIGURE 17 shows the output connections used in the control system;

FIGURE 18 is an enlarged diagrammatic view similar to FIGURE 14E showing the bead formation during heating;

FIGURE 19 is an enlarged diagrammatic view showing the resulting homogeneous weld structure following the welding process;

FIGURE 20 is a side elevational view of an alternate embodiment of a battery cover looking at the side which has the constant width;

FIGURE 21 is a side elevational view of the cover shown in FIGURE 20 but from the end showing the length of the cover;

FIGURE 22 is a side elevational view of a third embodiment of a battery cover having a length longer than that of the cover shown in FIGURE 21.

The preferred battery case for use with the apparatus of the present invention is the subject of European Patent No. 0,028,116 but is described and illustrated herein insofar as this is necessary for description of the construction and operation of the apparatus according to the present invention.

4

EP 0 144 569 B1

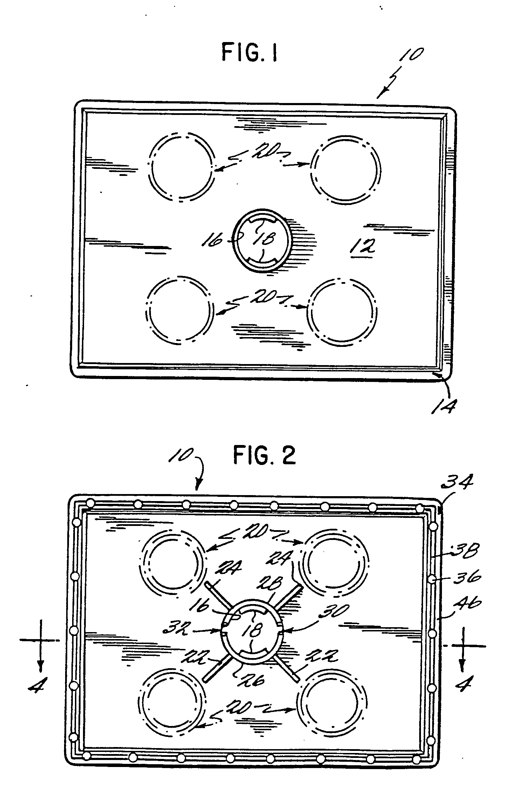

Turning first to FIGURE 1, a battery cover is generally indicated at 10 and is comprised of a main plate member 12.

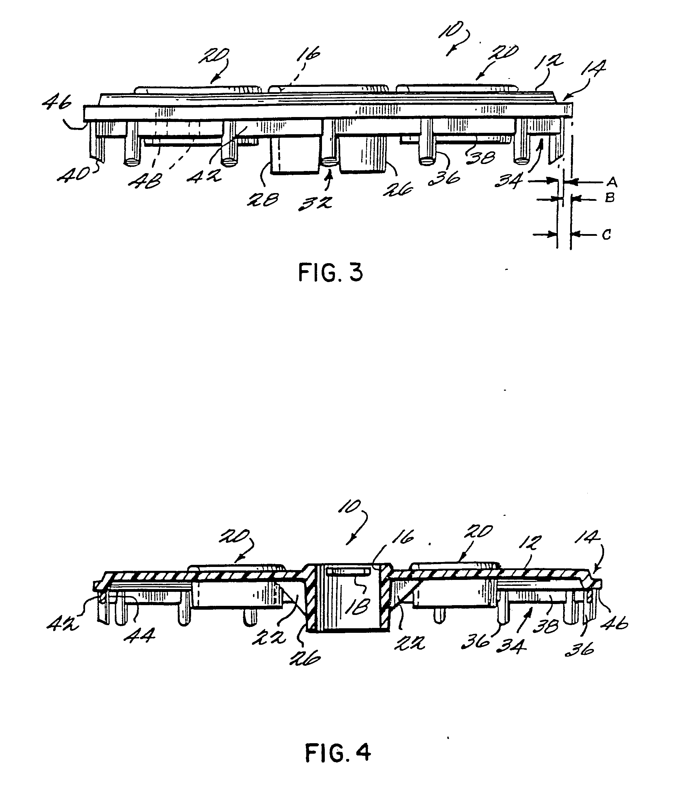

As shown in FIGURES 3 and 4, plate member 12 is provided with a depending rim portion, generally indicated at 14, although plate member 12 could be a substantially flat plane whose peripheral edge portion was located in the same plane as defined by the top and bottom surfaces of plate member 12.

The cover 10 is provided with a centrally positioned vent hole, indicated at 16, which is provided with projections 18 which will mate with similar projections on a vent cap so that hole 16 can be closed. Hole 16 provides the vent opening for the battery end, and as indicated hereinafter, also provides the means by which the cover can be locked into engagement with the welding head or heating and clamping assemblies. Cover 10 is also provided with additional openings indicated in phantom lines at 20, so that terminal posts from the electrodes within the battery jar will be able to extend up through cover 10 when placed on the battery jar.

The bottom of cover 10 is shown in FIGURE 2 where support ribs 22 and 24 respectively support the cover and depending portions 26 and 28 that extend from beneath vent hole 16 and provide stiffening for the vent area. In addition, depending portion 26 and 28 are separated by gaps, generally indicated at 30 and 32, which provides vent passages for gases which may accumulate within the battery during use.

Depending downwardly from the bottom surface of cover 10 and extending about the periphery thereof is an alignment structure, generally indicated at 34, which is comprised of a plurality of guide posts, indicated at 36, as well as flange or skirt members 38 which extend between guide posts 36 so that together a continuous member is formed about the periphery of the bottom surface.

Guide posts 36 are preferably spaced about 2.54 cm apart although the exact spacing therebetween is not critical, it only being important that they be spaced close enough together so as to straighten the upper edge or rim of the battery jar as they are inserted when cover 10 is placed on the battery jar so that the sidewalls of the battery jar adjacent the cover will not be rippled but rather will lie substantially flat. This helps to assure that the upper rim of the battery jar will lie directly beneath the outer periphery of cover 10 and adjacent the horizontal weld surface thereof. The length of the front surface of the guide posts 36 is approximately 1.27 cm and their bottoms are tapered as, at 40, at approximately 30 degrees although greater amounts of tapering can be employed with the tapered surface, serving as a guide so the cover can be easily inserted into the battery jar.

The skirt or flange 38 has a front or exterior surface 42 which is provided with about a 1 degree taper whereas the rear surface 44 has about a 3 degree taper to facilitate de-molding.

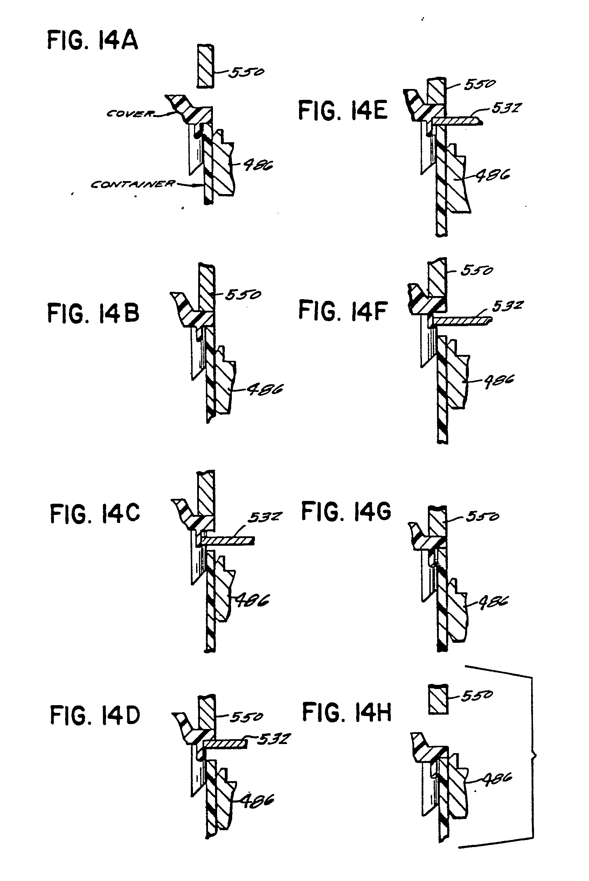

It will be noted from FIGURES 2—4 that guide posts 36 extend outwardly from surface 42 of skirt 38 a predetermined distance which is indicated at A at FIGURE 3. Distance A will preferably range from about .0381 cm to about .127 cm with a preferred spacing of about .0762 cm to about .1016 cm. Thus, when the outer portion of guide posts 36 are in contact with the interior sidewall 114 of a battery jar, as shown in the various views in FIGURE 14, the gap equal to distance A will be formed between surface 42 and surface 114. In addition, the outer edge of cover 10 is spaced from the outer surface of guide posts 36 by a distance B, as shown in FIGURE 3, which is equal to the thickness of the jar sidewall, normally about .254 cm (± .008) with distance C, the distance between the outer edge of cover 10 and surface 42, being a combination of distances A and B.

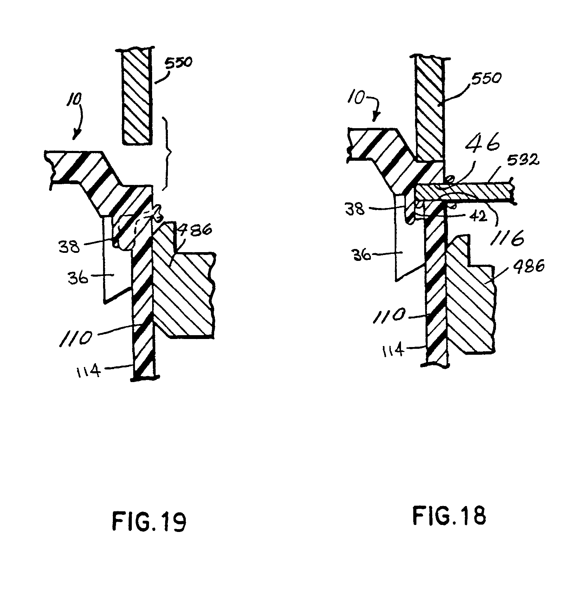

While guide posts 36 have been shown as cylindrical members, it should be understood that square, oblong or cross-sectional shapes could also be used and would perform equally as well since it is only important to obtain the gap between surface 42 and the outer surface of guide post 36. It should also be pointed out that the portion of the bottom surface of cover 10 lying between skirt 38, guide posts 36 and the outer edge of cover 10 defines the horizontal welded surface, indicated at 46, that will mate with and be welded to the upper surface of the battery jar, indicated at 116 in FIGURE 18. Further, the upper portion of guide posts 36 and at least certain portions of surface 42 will form a second weld area as these will become, at least in part, welded to portions of the interior surface 114 of the battery jar so that together they will form a second or vertical weld surface area.

As shown in the cross-sectional view of FIGURE 4, the skirt thickness is approximately half that of guide posts 36 but it should be understood that the thickness of skirt 38 could be enlarged with any enlargement occurring in an inward direction so that the gap between surface 42 and the outer surface of guide posts 36 would be maintained.

As indicated previously, it was found in the types of battery covers which employed solid continuous flanges which extend around the periphery of the cover that while such a structure exhibited very good shear resistance strength following bonding, welding only occurred between the horizontal surface of the cover and the top surface of the battery jar rim and did not extend vertically along the face of the flange. We believe this is because of the hydraulic flow characteristics and viscosity of the molten plastic which, as such covers were brought back down onto the jar, would be extruded outwardly away from the flange toward the outside of the joint. Thus, the flange itself acted as a dam preventing any inward flow which made the joint only as thick as the sidewall and accordingly produced a joint that was weaker in tensile strength than the sidewall.

In the cover described herein, guide posts 36 perform the same function as the solid flange of the above-described cover, but without the attendant problems. Guide posts 36, whether used with or without skirt 38, provide means for aligning the battery jar sidewalls with the molded cover and also serve to

5

maintain that aligned relationship during welding so that the cover and jar remain in engagement throughout welding. Further, by employing the spaced apart guide posts, an area is provided interiorly along the joint allowing that thermoplastic material to be extruded outwardly and inwardly as well.

In order to obtain an even stronger joint, we found that by including skirt portions 38 between guide posts 36 but recessed therefrom a predetermined distance, not only was a gap provided which still allowed the thermoplastic material to flow in a vertically downward direction, but a stronger joint was obtained because during heating a portion of guide posts 36 could be melted, surface 42 could be softened and together with the jar's interior wall became a vertically welded area. Thus, a longer joint was produced that exhibited, in total, more tensile strength than the sidewall of the battery; the joint structure was more stable than the battery jar itself. However, it should be understood that skirt portions 38 do not have to extend continuously between guide post 36. Thus, discontinuous skirt portions could be used therebetween as shown in phantom at 48 in FIGURE 3.

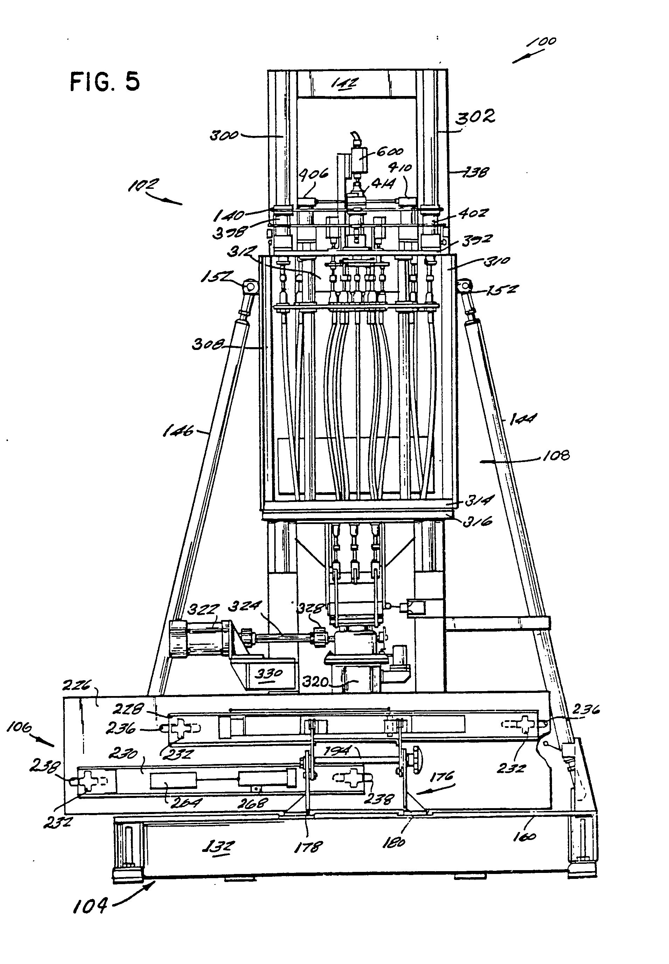

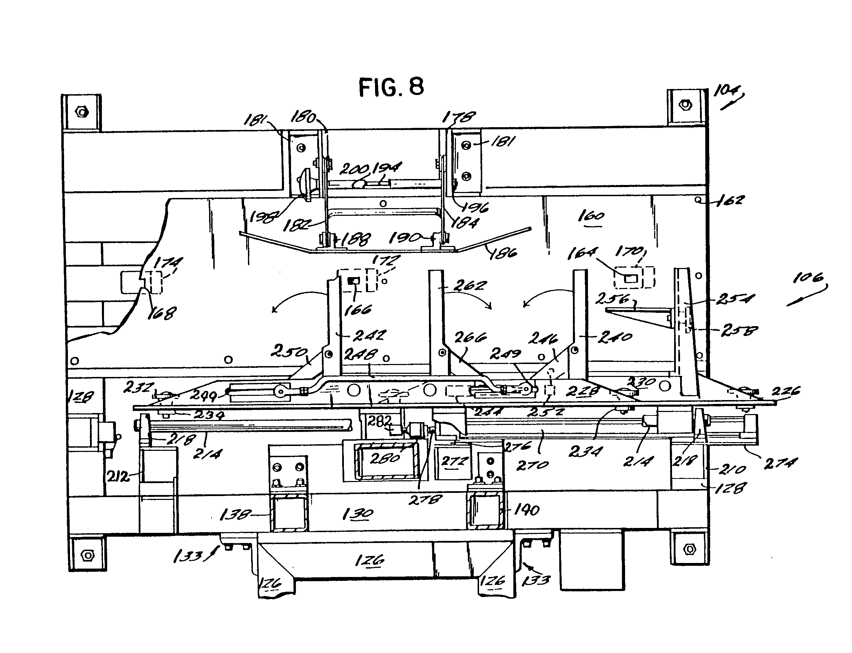

Turning now to the method and apparatus for joining the cover to the jar, the overall machine is best shown in FIGURES 5, 6 and 7 and turning to those figures the machine is generally indicated at 100 and is comprised of a number of main assemblies including a main frame assembly 102, a deck assembly 104, a transfer carriage assembly 106, a welding head assembly 108, a hydraulic supply 120, a primary hydraulic manifold 122, a secondary hydraulic manifold 123 and a peneumatic manifold 124. The frame can be considered as being comprised of front and rear portions, the rear portion being formed from frame elements 126 which form a rectangular base for supporting the hydraulic supply 120. The front frame is comprised of a base portion including side members 128, a rear member 130 and a front member 132. The rear frame is secured to the rear member 130 of the front frame by any convenient means such as by bolted brackets as shown in FIGURE 8 at 133.

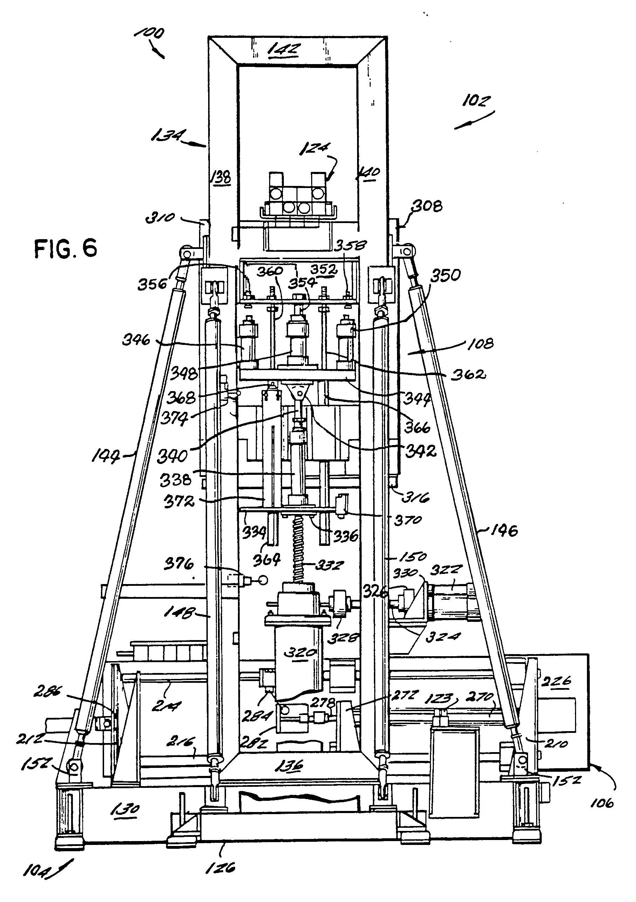

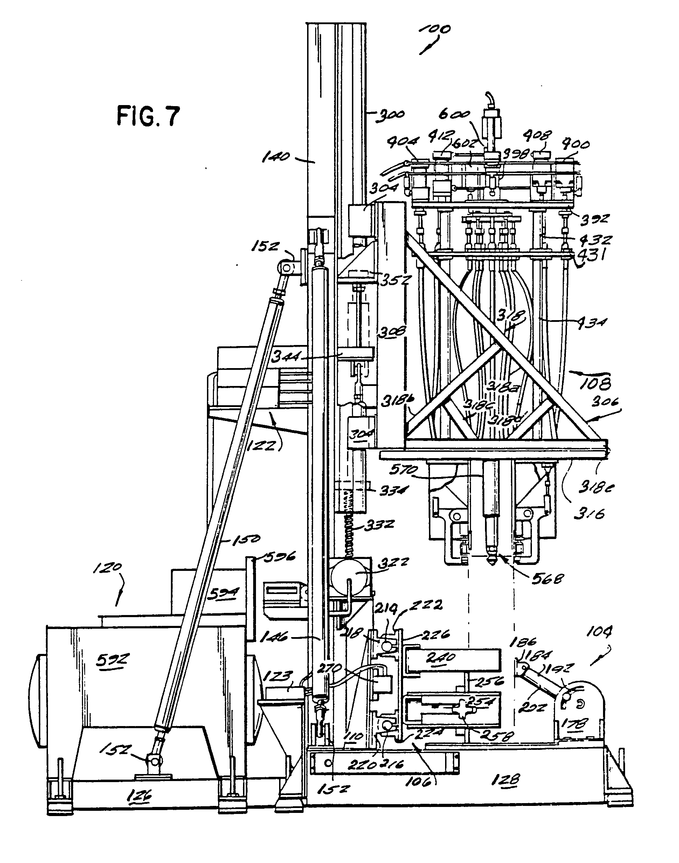

The front frame also includes a vertical frame member, generally indicated at 134, comprised of a bottom member 136, two side members, 138 and 140, and a top member 142 which together form another rectangular element that can also be bolted to the rear base member 130 and supported by braces 144 and 146 which extend from the upper portion of the vertical frame mamber 134, respectively, to the rear corners of the side base members 128, as shown in FIGURES 6 and 7, and by a second pair of braces, 148 and 150, which extend from the upper portion of frame member 134 back to frame elements 126 on either side of hydraulic supply 120. Braces 144—150 can be secured between the frame elements in any convenient fashion such as by the use of clevis type mounting brackets as are indicated at 152 throughout the various views.

The deck and transfer carriage assemblies 104 and 106, respectively, are located at the base of the machine and are supported by base members 128, 130 and 132 and extend across the area beneath the welding head assembly 108.

The deck assembly 104 is comprised of a plate member 160 secured to base members 128—132 by any convenient means such as screws 162 (shown in FIGURE 8). Plate member 160 extends across the entire width of the deck assembly 104 and preferably extends from beneath the transfer carriage assembly 106 to the front edge of front base member 132. Plate 160 is provided with three openings 164, 166 and 168 (shown in FIGURE 8) through which roller actuated limit or microswitches 170, 172 and 174 (also shown in FIGURE 8) can extend. These limit switches respectively define loading, welding and unloading stations and are aligned with each other along the path of travel of the carriage assembly 106 as will be more fully understood hereafter. Deck assembly 104 also includes a front guide, generally indicated at 176, which is mounted to frame member 132 by means of end plates 178 and 180 which are each attached to frame member 132 by means of brackets and screws as shown in FIGURE 8 at 181. Pivotally secured to end plates 178 and 180 are two mounting bars 182 and 184 which together support a pivotal guide bar 186 by means of mounting brackets 188 and 190.

End plates 178 and 180 are each provided with slots 192, as shown in FIGURE 7, that curve rearwardly away from the top portion of the end plates for about a 90 degree arc. A securing shaft 194 extends through these slots and is provided with threaded ends. As shown in FIGURE 8 a nut 196 is secured to the end extending through end plate 178 while an adjusting handle 198 is threadedly secured to the end of shaft 194 extending through end plate 180. A sleeve 200 overlies shaft 194 in the area between mounting bars 182 and 184 so that as handle 198 is turned, mounting bars 182 and 184 will be clamped and held in position between the ends of sleeve 200 and end plates 178 and 180. When handle 198 is loosened mounting bars 182 and 184 can be adjusted within slots 192 to correctly position guide plate 186 with respect to the front side of battery jars being processed after which the handle can then be turned to lock the position of mounting bars 182 and 184 as adjusted.

It is important that the front face of guide plate 186 be kept perpendicular to plate 160 so that it will lie flat against the sidewalls of battery jars passing thereby. In order to accomplish that, a pair of adjusting levers 202, as shown in FIGURE 7, extend from a point directly beneath each of the mounting bars 182 and 184 adjacent the point at which those mounting bars are attached to end plates 178 and 180. The other end of adjusting levers 202 are connected to brackets 188 and 190 adjacent guide plate 186. Thus, as mounting bars 182 and 184 are moved lever 202 causes guide plate 186 to pivot thereby maintaining the perpendicular alignment of the front face of guide bar 186.

With consideration still being given to FIGURES 5—8, the transfer carriage assembly 106 is mounted to frame members 128 by mounting brackets 210 and 212 which respectively support two horizontally extending and vertically spaced apart guide rails 214 and 216 through a pair of brackets 218 from the top rail 214 and a second pair of brackets 220 from the bottom rail 216. Two pairs of linear bearings or pillow blocks 222 and 224, respectively, secured to mounting plate 226, slidably support plate 226 to the upper and lower guide shafts 214 and 216. Secured to the front face of mounting plate 226 is an upper guide channel member 228 and lower guide channel member 230 which perhaps are best shown in FIGURES 5 and 8. These are secured to mounting plate 226 by means of handles 232 which have threaded bolts extending therefrom for engaging nuts 234 on the rear side of mounting plate 226. In order to allow channel members 228 and 230 to be adjusted horizontally a pair of slots 236 are provided in the mounting plate 226 for top channel member 228 and a second pair of slots 238 are provided in mounting plate 226 for the lower channel member 230. It is through those slots that threaded bolts from handles 232 extend to engage nuts 234. Thus, in order to move channel members 228 and 230 horizontally it is only necessary to loosen handles 232, make the required adjustments and then tighten handles 232 again thereby fixing the channel members in a desired location.

With reference first to the upper channel member 228, the transfer arms 240 and 242 are pivotally attached within channel 228 so they can fold into channel 228 as shown by the arrows in FIGURE 8. Arm 240 is actuated by means of a pneumatic cylinder, shown in phantom at 244, which acts on a linkage structure 246 pivotally connected to arm 240. We prefer to have arms 240 and 242 linked together and rather than employing two drive cylinders a linkage arm 248 is connected from linkage structure 246 across the top of channel bar 228 to a like linkage structure 250 secure to arm 242. A pair of slots 249 are provided in the top of channel member 228 and a suitable pivotal pin connection can serve to connect linkage arm 248 to the linkage structures 246 and 250 of arms 240 and 242, respectively. When cylinder 244 is actuated both arms 240 and 242 are moved simultaneously within the confines of channel member 228. A limit switch 252 is secured within channel member 228 so that it is tripped when arm 240 is in its closed position thereby providing an input signal indicating to the control system, described hereinafter, that arms 240 and 242 are in a closed position.

Turning now to the lower channel member 230, a fixed arm 254 is secured thereto by any convenient means and serves to support guide plate 256 which is adjustable within arm 254 by means of a handle and nut assembly 258 similar to those used to mount channel members 228 and 230. In addition, a slot is provided in arm 254 to allow guide plate 256 to be moved back and forth therein, again in order to accommodate varying sizes of battery jars. When guide plate 256 is in place, as shown in FIGURE 7, a battery jar, shown in phantom in FIGURE 7, will be held between guide plate 256 and front guide plate 186.

A movable arm 262 is pivotally secured to channel member 230 in a fashion similar to that used for arms 240 and 242 with the movement thereof being controlled by a second pneumatic cylinder 264, as shown in FIGURE 5, through a suitable linkage structure 266 so that it is moved in a direction opposite to that of arms 240 and 242 as indicated in FIGURE 8. A limit switch 268 is secured to channel 230 so that it will be actuated when arm 262 is closed. When limit switches 268 and 252 are both actuated, that will fulfill one of the conditions necessary prior to the controller allowing transfer carriage assembly to move back to the starting position which is shown in FIGURE 8. It should be understood that arm 262 is positioned between arms 240 and 242 so that when channel members 228 and 230 are properly adjusted one battery jar will beheld between fixed arm 254 and arm 240 while another will be held between arms 262 and 242. Also, during the initial phases of the welding cycle, we prefer to leave arms 240 and 254 around the jar that has been moved from the load station to the weld station.

Movement of the carriage transfer assembly is provided by hydraulic cylinder 270 which can be similar to a Parker Hannifin Cat. No. PA5 22 inch/(57.15 cm) stroke hydraulic cylinder manufactured by the Parker Hannifin Corps., Des Plaines, Illinois. Cylinder 270 is mounted to bracket 210 and an internal mounting bracket 272 by means of its own mounting brackets 274 and 276, respectively. Drive cylinder 270 is provided with a drive rod 278 connected through coupling 280 to bracket 282 fixed to the rear of plate 226 by any convenient means such as bolts or screws (not shown).

As shown in FIGURE 6, two limit switches 284 and 286 are provided to respectively indicate when drive rod 278 is in its retracted and extended positions thereby providing inputs to the control system indicating when the transfer assembly is at its load station, as shown in FIGURE 8, or in its full stroke position at which time arms 254 and 240 will occupy the position shown for arms 262 and 242 in FIGURE 8 whereas arms 262 and 242 become moved so as to overlie limit switch 168 at the unload station. Thus, with one jar in the load station above limit switch 170 and a second jar at the weld station, between arms 242 and 262, actuation of cylinder 270 will move the jars, respectively, from the load to the weld station and from the weld station to the unload station.

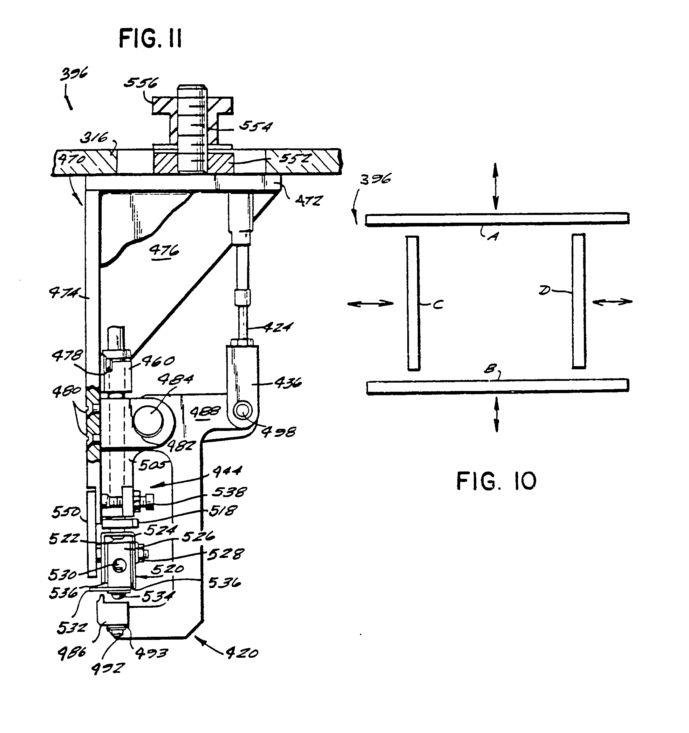

Overall views of the welding head assembly 108 are shown in FIGURES 5—7 and 9, while additional details of the welding head structure are shown in the FIGURES 10—13. Turning first to FIGURES 5 and 7, two vertically mounted guide shafts 300 and 302 are respectively secured to frame members 140 and 138. Welding head assembly 108 is slidably secured to guide shafts 300 and 302 by means of linear bearings or pillow blocks 304 which are in turn directly secured to the welding head assembly 108. In particular, pillow blocks 304 are secured to a welding head frame structure, generally indicated at 306, comprised of two vertical members 308 and 310 between which a support plate 312 and a tie bar 314 extend. Elements 308—314 comprise the rear vertical section of the welding head frame structure and pillow blocks 304 are connected to vertical members 308 and 310. A main horizontal mounting plate 316 is attached along its rear

7

edge to members 308 and 310 and bar 314 with its front and intermediate parts supported by a network of frame members, generally indicated at 318, and including elements 318a—318e.

Priors to describing the remaining structure of welding head assembly 108, it is important to understand how the welding assembly is supported and moved.

The primary support for the welding head assembly 108 and the main up/down adjusting mechanism is provided by a hydraulic actuated jack screw 320 which is a mechanical jack manufactured by the Duff Norton Company, Charlotte, North Carolina, Model 1802. This jack provides the gross adjustment for the weld head and will be adjusted according to the height of the jars to be processed. It is driven by means of a hydraulic motor 322 such as the Char-Lynn Cat. No. 11—832 manufactured by Eaton Corp., Eden Prairie, Minn. Motor 322 is connected to jack 320 by its drive shaft 324 through suitable couplings 326 and 328 and supported by vertical frame member 140 by a mounting bracket 330. Accordingly, it together with the base portion of jack 320 remain fixed in position. Jack screw 332 is operatively connected to a first or lower support plate 334 by means of a mounting bracket 336. Connected to the opposite side of the first or lower support plate 334 and directly opposite jack screw 332 is a hydraulic cylinder 338 whose drive rod 340 is attached by means of a clevis type mounting bracket 342 to second or intermediate mounting plate 344. We have found it preferable to have the stroke of hydraulic cylinder 338 be approximately 10.16 cm in order to provide sufficient clearance for all forms of terminal posts so that jars being moved by the carriage assembly 106 across deck plate 160 pass freely beneath welding head assembly 108. Thus, jack screw 332 places the welding head assembly 108 in its exact operating position and the 10.16 cm stroke of cylinder 338 provides sufficient clearance to raise the welding head assembly 108 out of the path of jars being moved across the deck.

As is clear from FIGURE 6, three additional cylinders are mounted to the top side of mounting plate 344 and these cylinders are respectively shown at 346, 348 and 350. The central cylinder 348 provides the primary drive force for moving the welding head assembly 108 during the heating and welding cycle, as will be more fully described hereinafter, and it is secured to an upper mounting plate 352 through its drive shaft 354. Mounting plate 352 is secured to the welding head frame 306, as shown in FIGURE 7, by being secured to vertical frame members 308 and 310 by any convenient means such as by welding or bolts (not shown). Thus, when cylinder 348 is actuated the entire welding head assembly 108 will move vertically up and down. In order to correctly position the welding head assembly 108 as it is moved up and down during both the heating and welding phases of the operating cycle, heat stops and weld stops are provided. The heat stops control the "down" position of the weld head assembly 108 during heating and are comprised of hydraulic cylinders 346 and 350 and specifically by their drive shafts which contact opposing adjustable studs 356 and 358 which can have a variable length and can be adjusted within mounting plate 352. The up stop for controlling how high assembly 108 is raised and the weld stops are provided by threaded shafts 360 and 362 which are each provided with pair of lock nuts in position on opposite sides of mounting plate 352. These opposing lock nuts provide positive control over the raised position and also over the lowered position of welding head assembly 108 in those instances when hydraulic cylinders 346 and 350 are deactuated and their drive shafts are retracted.

It should also be pointed out that in order to ensure the smooth raising and lowering of the weld head assembly 108 by cylinder 338, two guide shafts 364 and 366 are secured to the base of the intermediary mounting plate 344 and extended downwardly through mounting plate 334 within bearings provided in openings in that plate.

As shown in FIGURE 6, limit switches 368 and 370 are provided to respectively produce input signals to the control means to indicate the retracted and fully extended conditions of drive rod 340 of cylinder 338. Limit switch 368 is secured to a bracket 372 secured to plate 334 and will abut the bottom of intermediate plate 334 when drive rod 340 is fully retracted. Limit switch 370 is secured to the side of plate 334 and its actuating arm rides against shaft 342 and will move inwardly when drive rod 340 is fully extended and shaft 342 has been raised about flush with the bottom of plate 334.

Two additional limit switches 374 and 376 are provided to indicate the two extreme positions of jack screw 332 of the jack 320 with both being actuated by the plate 334. Limit switch 376 indicates when the jack screw 332 is fully retracted and will prevent further lowering of the weld head assembly 108 whereas limit switch 374 indicates the highest safe position for the jack screw 332 that can be tolerated without having the jack screw becoming disengaged from jack 320.

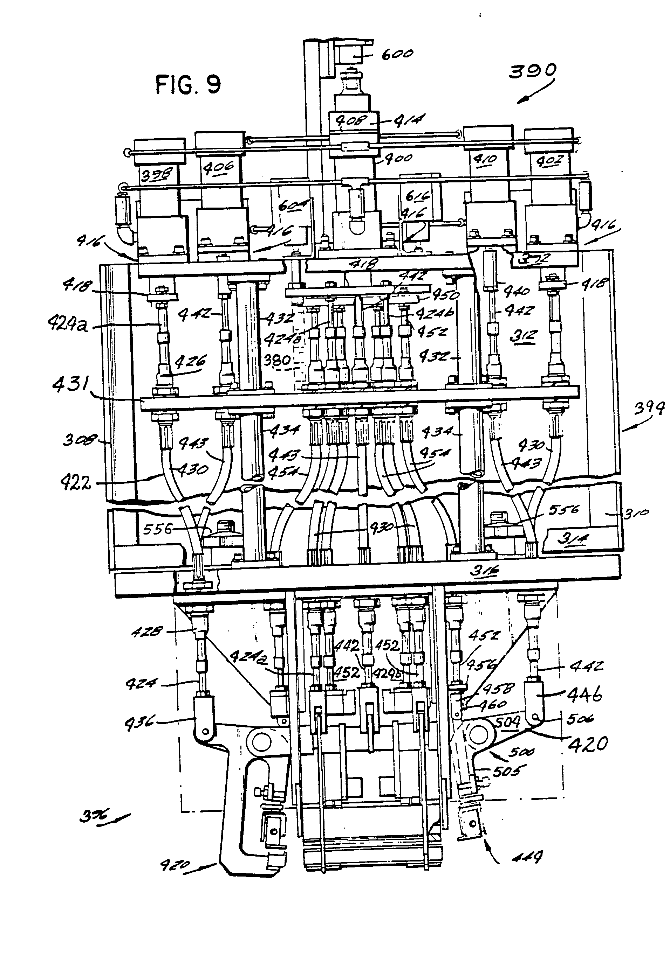

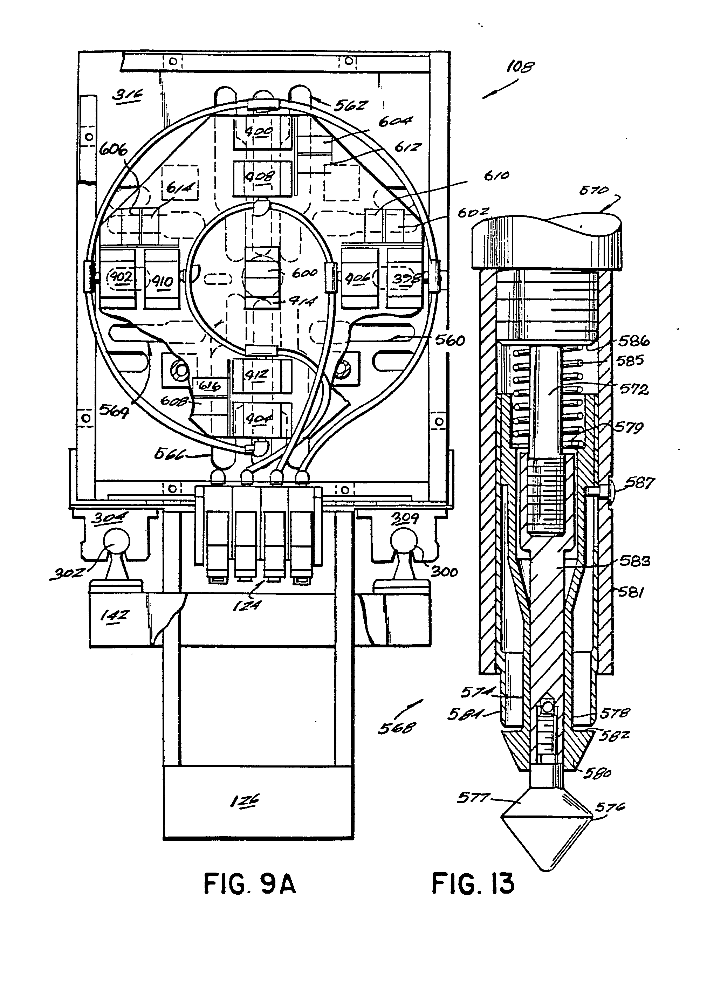

Turning now to FIGURES 5, 7, 9 and 9A, and it can be seen that the operating portion of the welding head assembly 108 is comprised generally of an upper actuating cylinder assembly, generally indicated at 390, which is supported by a top plate 392, an intermediate section containing control shaft mechanism, generally indicated at 394, located between the top plate 392 and the main horizontal mounting plate 316 and moveable, separate heating and clamping assemblies, generally indicated at 396 (in FIGURE 9).

The upper actuating cylinder assembly 390 is comprised of nine cylinders which include an outer group of four pneumatic cylinders 398, 400, 402 and 404, an inner group of four pneumatic cylinders 406, 408, 410 and 412 and a centrally located hydraulic cylinder 414. As is indicated in FIGURE 9, each of these cylinders can be secured to top plate 392 by mounting brackets and bolts, generally indicated at 416.

Each of the pneumatic cylinders 398—412 have a spring return and are actuated by valves controlled by solenoids and when so actuated will cause their respective drive rods to be extended through a predetermined stroke. As shown in phantom in FIGURE 9, the stroke of cylinders 398—404 can be controlled by stop rods 380 if the stroke of the cylinder is otherwise too long.

Considering first the outer group of four pneumatic cylinders 398—404, the drive rod of each is connected to a control coupling member 418 and serves to control clamp members, generally indicated at 420, by means of solid drive cable assembly generally indicated at 422. This drive cable assembly includes drive shafts arranged in pairs designated 424a and 424b, upper and lower cable connectors 426 and 428, respectively, and outer guide sleeves 430.

Intermediate plate 431 is supported from the upper plate 392 by four short mounting posts 432 whereas four long mounting posts 434 extend between intermediate plate 431 and the main horizontal mounting plate 316. Thus, plate 431 serves as a terminal point for all of the connectors 426 from each of the control cables. The lower end of sleeves 430 and specifically lower cable connectors 428 are mounted to the heater and clamp assemblies 396 so that each of the control shafts can correctly actuate specific portions of the heater and clamp assemblies 396.

With respect to cylinder 398 and the clamp assembly, generally indicated at 420, the lower end of drive shaft 424 is connected by clevis 436 which is pivotally connected to clamp member 420.

The inner group of pneumatic cylinders 406—412 have each of their respective drive rods extending through a control coupling 440 and connected directly to a control shaft 442 which again extends through coupling members similar to those indicated at 426 and 428 and through a sleeve 443 directly to heater assemblies, generally indicated at 444, via a clevis type coupling 446.

Pneumatic cylinder 414 has its drive rod (not shown) connected to a coupling plate 450 which joins together eight drive shafts 452. The eight drive shafts 452 are divided into four pairs with each pair going to one of the heater clamp assemblies 396 to control the vertical up and down motion that will subsequently be applied to the heater assemblies 444. It should be kept in mind that the arrangement and mounting of the clamp and heating assemblies 420 and 444, respectively, are designed so that clamp assembly 420 can be pivoted inwardly toward the battery jar and outwardly away therefrom while the heater assemblies 444 cannot only be pivoted toward and away from the battery jars but moved a slight amount in an up and down direction independent of the welding head as well as the clamp assemblies 420. It is this up and down travel of the heater members 444 that is controlled by hydraulic cylinder 414 and shafts 452. As was the case with the control shafts for the pneumatic cylinders 398—412, control shafts 452 are passed through upper and lower coupling members similar to those indicated at 426 and 428 and their own respective sleeves 454 which are similar to those indicated at 430 and 443. The lower end of shafts 452 are connected through a stop plate 456 to a clevis member 458. It should also be pointed out that clevis member 458 operates with bracket 460 against which stop member 456 abuts so that together stop member 456 and bracket 460 provide "down" stop control which limits the extend to which heater assembly 444 can be lowered.

With emphasis still being placed primarily on FIGURE 9, reference can also be made to FIGURES 10—12 where more of the details of the clamp assemblies 420 and the heating assemblies 444 are shown.

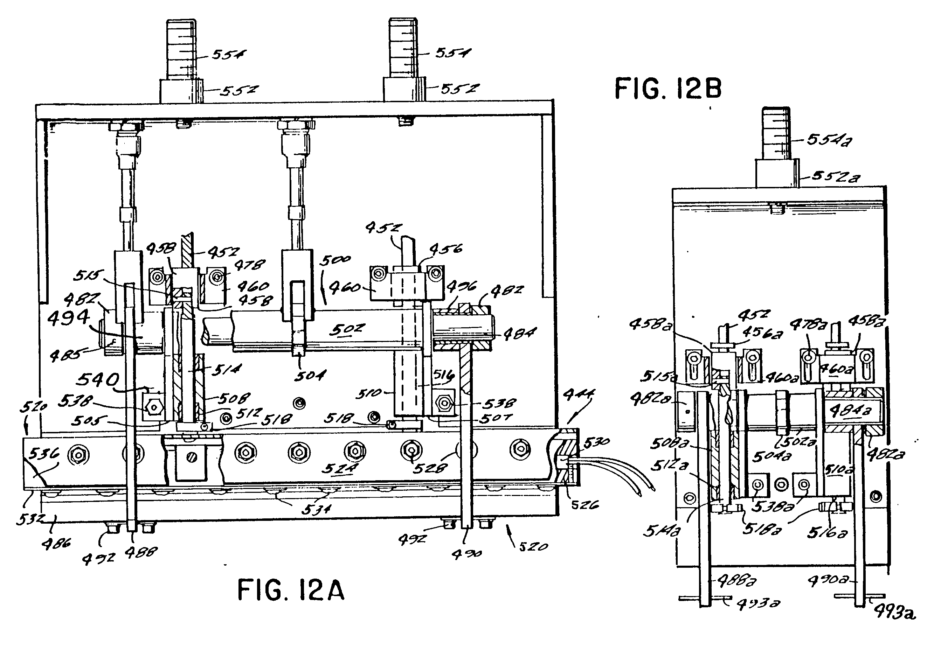

As is diagrammatically shown in FIGURE 10, four heating and clamping assemblies 396 are used and are indicated at A, B, C and D, respectively, they are positioned in opposing pairs. Assemblies C and D are short and have a length comparable to the relatively constant width of battery jars which are in a narrow series of either 15.72 cm or 15.88 cm or a wider series of 21.91 cm. Since the length of batteries can vary anywhere from about 5.08 cm to about 30.48 cm or 35.56 cm, assemblies A and B are longer and are positioned outside assemblies C and D. Accordingly, assemblies A and B should have lengths equal to or greater than the longest length that will be handled and we have found that a length of 33.02 cm to 35.56 cm should be sufficient for most purposes. Each of the heating and clamping assemblies is, apart from the length differences, constructed substantially identically and an end view of a representative one is shown in FIGURE 11. A side elevational view of the longer units A and B is shown in FIGURE 12A whereas a respresentative side elevational view of the shorter units C and D is shown in Figure 12B. Also, for clarity, some elements have been omitted, cut away or included in phantom in these figures. In addition, the reference numerals used in FIGURE 12B which relate to common parts which have simply been reduced in size include the letter "a".

Each of the heating and clamping assemblies are mounted to an L-shaped structure generally indicated at 470, comprised of a top horizontal plate 472 and a vertical plate 474. Plate 472 can be welded or screwed directly to vertical plate 474 or alternatively a triangular-shaped end piece, indicated at 476, could be used to complete the L-shaped structure 470. As shown in FIGURE 11, bracket 460 is secured to vertical plate 474 by screws 478, and likewise, screws 480 can be used to secure two spaced apart end plates 482 to vertical plate 474. End plates 482, as shown in FIGURE 12A, for example, are positioned at spaced apart locations and serve to support shaft 484 which is held in place by set screws 485. Clamping assembly 420 and heating assembly 444 are both pivotally attached to shaft 484 as follows. Clamping assembly 420 is comprised of a clamp bar 486 secured to two bell cranks 488 and 490 by screws 492 and bar mounts 493. The inner end of the top horizontal portion of the bell crank is provided with an opening that fits about shaft 484 and a collar, respectively indicated at 494 and 496, is welded to each crank arm adjacent the openings and these are also pivotally retained on shaft 484. The outer end of the top horizontal section of each bell crank, 488 and 490, is pivotally secured through pins 498 to clevis members 436 which are connected to control shafts 424 and the outer cylinders 398—404.

Shaft 484 also supports a one piece crank arm 500 which supports the heater assembly 444. Crank arm 500 is comprised of a sleeve 502 from which horizontal member 504 extends rearwardly away from plate 474 and is connected by pin 506 to clevis 446 so that the heater assemblies 444 can be pivotally controlled by control shafts 442. As shown in FIGURE 9, on the right side where the clamp assembly 420 has been omitted, and in FIGURES 12A and B, arms 505 and 507 depend from each end of sleeve 502 and each has an opening that fits about shaft 484. Bearing sleeves 508 and 510 are welded or otherwise secured to the inside surface of arms 505 and 507 and each is provided with internal bearings 512. Shafts 514 and 516 are slidably retained within bearing sleeves 508 and 510, respectively, and each is respectively connected to a separate clevis member 458 by pins 515, which are in turn connected to control shafts 452. Connected to the bottom of each of the shafts 514 and 516 is an "up" stop collar 518 and a heating bar, generally indicated at 520, is connected to the end of shafts 514 and 516 by screws 522. Accordingly, the heating bar 520 can be raised and lowered vertically by the action of shafts 452 as controlled by cylinder 414 with the limitation over its travel in the vertical direction being provided in an upward direction by collars 518 which abut against the bottom of bearing sleeves 508 and 510 and in a downward direction by stop plates 456 which abut against brackets 460.

Heating bar 520 is comprised of an outer housing 524 in which a heater block 526 is retained by bolts 528. A 600 watt 240 volt ⅝ inch Watlow heater, Model No. G5J36, indicated at 530, is retained within block 526 and serves to heat a heating blade 532 fixed to the bottom of block 526 by screws 534. A layer of insulation 536 is provided on each side of block 526 in order to space that block from housing 524 and as can be seen from FIGURE 11 heating blade 532 extends inwardly further than the inner face of clamp bar 486.

While the "up" and "down" stops control the vertical motion of heating assembly 444, the pivotal motion is controlled by an "in" stop control in the form of a threaded bolt 538 secured in a mounting bracket 540 connected to arms 505 and 507.

Returning again to FIGURE 11, the vertical plate 474 is provided along its lower edge with a rail member 550 which applies pressure to the joint area between the battery cover and jar and is also used to secure the cover to the weld head assembly 108.

As indicated with respect to the diagrammatic showing in FIGURE 10, each of the heating and clamping assemblies 396 is slidably secured to mounting plate 316 and is movable toward and away from the center thereof. In order to effect that type of mounting a guide member 552, as shown in FIGURE 11, is secured by welding or other convenient means to the top of horizontal plate member 472 and a threaded stud 554 extends upwardly away from guide member 552 and is used with handles 556 to lock each of the assemblies 396 in a fixed position. The horizontal mounting plate 316 is provided with a plurality of slots for each of the four heating and clamping assemblies, these slots being identified generally at 560, 562, 564 and 566, and it is within those pairs of slots that each of the guide members 552 can slide. It should be noted that the long assemblies 396 each have two guide members 552 while the short assemblies have one. The remaining slots in plate 316 are provided to allow the control shaft couplings to move as the assemblies 396 are moved.

In order to adjust the four heating and clamping assemblies 396 for a particular size battery jar and cover combination, the width of the bar in a given series will be a constant factor and equal to the length of members C and D in FIGURE 10. The length, however, can change, depending on the number of plates or elements being used, and members C and D would first be set like distances away from the center of plate 316 and locked in place with the distance between them being equal to the length of the series of jars to be processed. Next, the heating and clamping members A and B in FIGURE 10 would be moved so that they are in a position directly adjacent the opposite ends of heating and clamping members C and D. Thus, when a jar was properly positioned between members A, B, C and D the clamping bars in each of these members would clamp all four sidewalls and the heating bars 532 in each of the assemblies would be able to contact the entire periphery between the cover and the jar. It is important to keep in mind, in this regard, that assemblies A, B, C and D are positioned so that when the heating assemblies are in their closed position the heating bars 532 in assemblies A and B will touch and engage the heating bars of C and D so that when in position during heating the entire periphery of the cover and jar being processed will be heated and melted to the appropriate degree.

Turning now to FIGURES 7 and 13, a cover pickup assembly, generally indicated at 568, is shown and is driven by a pneumatic cylinder 570 located at the center of plate 316 where it is held in place by means of a threaded ring and sleeve (not shown) to accommodate various vent heights in covers. This cylinder is used to assure firm contact between the cover and rail members 550. The lower portion of this cover pickup assembly 568 is dimensioned so that it can fit through a centrally located vent opening in battery covers. Cylinder 570 is provided with a drive arm 572 that is connected to a head member 576 by a connecting shaft 583. Head member 576 is also provided with an inverted cone-shaped surface 577. This drive unit is slidably held within a split sleeve member, generally indicated at 573, which is comprised of a plurality of resilient arms 578 each of which terminates at a head member 580 which has a portion that extends outwardly beyond arms 578 so as to define a ledge or seat 582.

To facilitate an easy release of the cover and removal of the resilient arms 578 from the cover vent hole, a withdrawal guide sleeve 584 is provided within cylinder 570 which extends downwardly to a point just above seat 582. Sleeve 584 has an outer diameter substantially the same as the outer periphery of seats 582 when in their retracted, normal position so that upon release of the cover, head members 580 will not extend outwardly beyond sleeve 584 and will not, therefore, catch on the cover. Also, guide sleeve 584 and the split sleeve member 574 are secured together so that they can slide together within an outer sleeve 581 that is secured to cylinder 570.

The upper portion of split sleeve member 574 is formed with a cup shaped seat portion 579 and a spring 585 fits between seat portion 579 and a support surface 586 internally provided at the end of cylinder 570. Spring 585 prevents split sleeve member 574 from being withdrawn into cylinder 570 as drive arm 572 is retracted.

After the depending portion of the drive rod 572 and the split sleeve member 574 are extended downwardly into the vent hole of the cover, the drive rod is pulled back into the cylinder which causes a cone-shaped surface 577 on head member 576 to move against head members 580. Because of the presence of split resilient arms 578, head members 580 are used outwardly beyond guide sleeve 584 as well as the periphery of the vent opening, beneath the surface of the cover. As the force of spring 585 is overcome following the expansion of resilient arms 578, further retraction of drive arm 572 moves seat 582 upwardly so that the cover will likewise be raised upwardly toward and into contact with rail members 550. At that point, the cover will be locked to the welding head assembly 108 and will move as the weld head assembly 108 is moved. A support lug 587 extends through the sidewall of sleeve 581 and serves to retain the split sleeve member 574 at a predetermined lower position and prevents members 578 from falling out of its position within sleeve 581.

Turning now to FIGURES 14A—H, the progression of steps that occur during the heating and welding cycles are shown. The beads resulting from these processing steps have been omitted for the sake of clarity.

FIGURE 14A represents the status of the cover and battery jar after they have been moved from the load station to the welding station as the welding head assembly 108 is being lowered into position. Clamp bars 486 have already been brought to bear against the sidewalls of the battery jar and rails 550 are descending toward engagement with the outer periphery of the cover. Guides 36 provided on the battery cover engage the interior wall of the battery jar and the pressing action of bars 486 assures that opposing sidewalls of the battery jar are parallel and that adjacent walls are perpendicular so that a proper fit is assured between the cover and the jar sidewalls.

In FIGURE 14B, rails 550 are in contact with the outer periphery of the cover and it is at this point where the cover pickup cylinder 570 will be actuated by the control system, described hereinafter, in order to assure the fixed relationship of the cover between that cylinder and rails 550.

Turning next to FIGURE 14C, cylinder 348 has caused the entire welding head 108 to be moved upwardly but it should be noted that the entire cover and particularly the guides that depend therefrom are not removed from their contact with the sidewall of the battery jar. This is important because we have found it to be quite helpful to have the parts which are melted brought back together as quickly and as accurately as possible. By not removing the cover structure from the jar, the initial alignment established between the cover and the battery jar, which is aided by the presence of clamp bars 486, is not lost at any time during the heating and welding procedures. The heating blades 532 have been pivoted into position between clamp bars 486 and rails 550 and also in between the top of the battery jar and the bottom of the outer periphery of the cover. The pivoting action of the heater blade 532 has been effected by the inner group of cylinders 406—412. We have found that it is desirable to separately move the long and short heating bars and this allows the short bars to be pivoted ahead of the long ones when pivoted into position and after the long ones when pivoted out of position. This prevents any possible scraping between the opposed pairs as they are moved.

It is sometimes important to have the heating blade 532 to contact either the cover or the battery jar for a longer length of time, depending upon the type of plastic used, and in FIGURE 14D the heating blade 532 is shown as having been moved upwardly so that it engages the bottom surface of the cover. This upward movement has been effected by pneumatic cylinder 414 and the upward limitation on the movement of the blade 532 is effected by the "up" stop or collars 518.

Thereafter, turning to FIGURE 14E, the entire welding head can be lowered to the heat stop position defined by heat stop cylinders 346 and 350. In this position, the heating blade 532 is in contact with both the cover and the battery jar and that position can be maintained for a predetermined dwell time as is necessary to effect the required degree of melting to produce an adequate weld. This is controlled by an adjustable timer T1.

After the conclusion of that dwell period, the weld head assembly 108 is again raised by cylinder 348. This disengages the heating blade 532 from the battery jar but, as will be recalled from reference to FIGURE 14D, the heating blade had been raised to an "up" position so that it engaged the cover. We have found that it is not desirable to merely pivot the heating blade away from melted surfaces but rather that such disengagement should occur in a vertical direction. Therefore, the heating blades 532 are caused to be lowered again away from the cover in a motion reverse to that used in FIGURE 14D to bring them into engagement with that cover with the heater blades now being moved downwardly again by cylinder 414. This downward movement can occur simultaneously with the raising of the welding head assembly 108. In this instance, stop plate 456 limits the downward travel of heating blades 532 allowing them to become disengaged from the cover but not to move down so as to re-engage the top surface of the battery jar. This intermediate position for the heating blades 532 is shown in FIGURE 14F. Thereafter, the heating blades can be pivoted out of the way and the welding head can again be lowered by the action of the cylinder 348 this time to the position of the weld stops defined by shafts 360 and 362 and the adjusting nuts thereon. The welding position is shown in FIGURE 14G and clearly shows the cover in contact with the sidewall of the battery jar. The relationship between pickup cover cylinder 370 and rails 550 still remains and accordingly weight from the welding head assembly 108 can be brought to bear against the joint through rails 550. If the weight of the welding head is too great some amount of positive pressure can be applied by cylinder 348 so as to assure the correct amount of weight during the welding portion of the cycle. We have found that about 136.4 Kg $\pm$ 45.5 Kg is all that is needed in terms of weight to be applied to rails 550 to effect a proper and high quality seam between the cover and the battery jar.

In FIGURE 14H, the dwell time for the welding cycle controlled by another adjustable timer $T_2$ has passed, the cover pickup cylinder 370 has released its grip on the cover and the welding head is being raised away from the now completed weld area by cylinder 338. At the top of the stroke of this cylinder, the welding head 108 will be in position to allow the carriage assembly 106 to move another battery jar from the load to the weld station and to remove the finished jar from the weld to the unload station.

As indicated concerning FIGURE 14D, there may be instances where it is desirable to have the heater blade 532 contact the cover and the jar for the same amount of time or for that matter to have the heater contact the top of the jar for a longer period. If it is desired to heat the cover and jar surfaces for approximately equal periods of time the heater assembly 444 can be allowed to float following its inward pivoting by cylinders 398—404 so that rather than being raised or lowered it could be moved downward along with the welding head assembly 108 so that it comes into contact with both the cover and the jar at approximately the same time. Since the heater bars are at their lowest position relative to the cover when they are pivoted inwardly to the position as shown in FIGURE 14C, the removal of drive pressure from cylinder 414 allows the welding head assembly 108 to correctly position the heater blades 532 as shown in FIGURE 14E.

If it was desired to have the heating blade 532 contact the surface of the jar for a longer period of time following its being pivoted into the position shown in FIGURE 14C, driving force from cylinder 414 can be left to maintain the lowest position for the heating blades 532 and thereafter the welding head can be lowered. In this instance, the heating blades will contact the jar prior to the full descending stroke of the weld head assemby 108 which will bring the cover into contact with the upper surface of the heating blades.

In each of these operating modes, the withdrawal sequence of the heating blades 532 is the same as that initially described. Further, as indicated previously, it is most desirable to withdraw the heating blade from the thermoplastic surfaces in a vertical or perpendicular direction rather than having the heating blades slide either between the two now melted thermoplastic members prior to raising the cover away from the battery jar or across either melted surface in a horizontal fashion prior to moving the heating blade out of contact therewith.

With respect to FIGURE 14G, it should be understood that this position can be held by timer $T_2$ for a period of time ranging from about 15 to about 25 seconds during which the weld area can cool down and set. This time period allows the thermoplastic material to resolidify at the joint and also provides time for the melted area to regain strength prior to being released. While beads form during the heating and welding steps have been omitted, it should be understood that beads will form on the outside of the joint between the cover and the jar and as an optional step, clamp bars 486 could be raised vertically off the jar and cover assembly prior to their being pivoted out of contact therewith so as to spread the still soft beads into a flat layer.

As will now be described, the operation of this apparatus is effected by both pneumatic and hydraulic systems. The pneumatic system is supplied with a source of compressed air (not shown) which is filtered through a filter and regulator assembly made by the Parker Company, Oswego, Michigan with the air being then supplied to the pneumatic manifold 124. This pneumatic manifold is actuated by solenoids under the control of a Model 5 Texas Instruments Programmable Control System (hereinafter called the 5 TI control system) which includes a programmer, sequencer and input output boards which provide the necessary control logic interface between the operating solenoids of the pneumatic and hydraulic systems and the limit switches employed throughout the apparatus.

The hydraulic supply 120 is supplied by the Pneumatic and Hydraulic Distributors, Inc. of Marlboro, Massachusetts, Serial No. 71935 and includes a hydraulic reservoir 592 and a drive motor 594. This drive motor can be a three phase motor such as Model Number M80031 made by the Baldor Electric Company, Fort Smith, Arkansas. The hydraulic system also includes a radiator 596 so that the hydraulic fluid returning to the reservoir returns via the radiator and is cooled prior to being reused. Output from the reservoir flows to the hydraulic cylinders as regulated by a primary hydraulic manifold 122 and a second hydraulic manifold 123 both of which are actuated by solenoids under the control of the 5 TI control system. The primary hydraulic manifold 122 includes four directional control valves with one serving to control the up and down motion of the heating assemblies and specifically the actuation of cylinder 414, a second controls the melt stop cylinders 346 and 350, a third controls the primary short stroke cylinder 348 used during the heating and welding steps and a fourth controls the clearance cylinder 338. The secondary pneumatic manifold 123 serves to control the operation of motor 322 which drives jack 320 and also the main carriage drive cylinder 270.

The pneumatic manifold 124 also includes a plurality of solenoid actuated valves which respectively control cover pickup cylinder 570, the simultaneous actuation of carriage arm cylinders 244 and 264, the actuation of clamp cylinder 398—404 and two additional valves each controlling opposing pairs of the heater assemblies one controlling the long assemblies shown in FIGURE 12A and specifically cylinders 406 and 410 and another valve for controlling the short heater assemblies shown in FIGURE 12B specifically cylinders 408 and 412. As indicated previously, it is desirable to have the shorter heater assemblies actuated and pivoted into position first followed by the longer assemblies so that no sliding engagement occurs. The delay between the actuation of these two groups is only momentary but is sufficient to bring the short assemblies into position first.

A number of limit switches have been already identified previously in the specification but additional limit switches are employed for each of the cylinders at the top of the welding head, namely 398—414, and the limit switches are respectively identified as the even references 600—616. These limit switches can be either actuated by the cylinder's drive rods as these move or actuating arms can extend through the top mounting plate 392 so that they can contact, for example, couplings 418. In any event, it is only necessary that these limit switches be able to produce an input signal when the heating and clamping assemblies are pivoted out of their operating position.

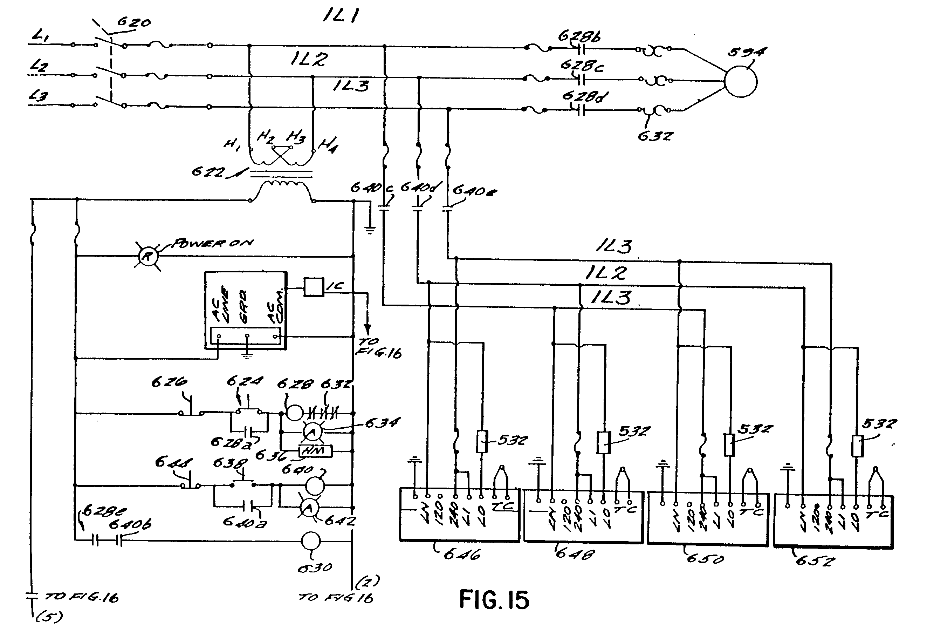

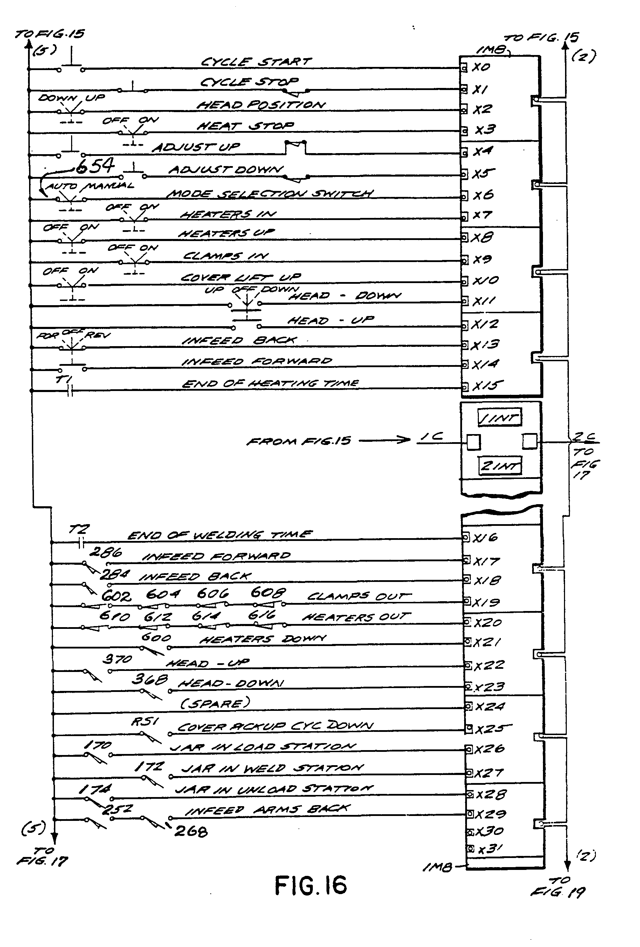

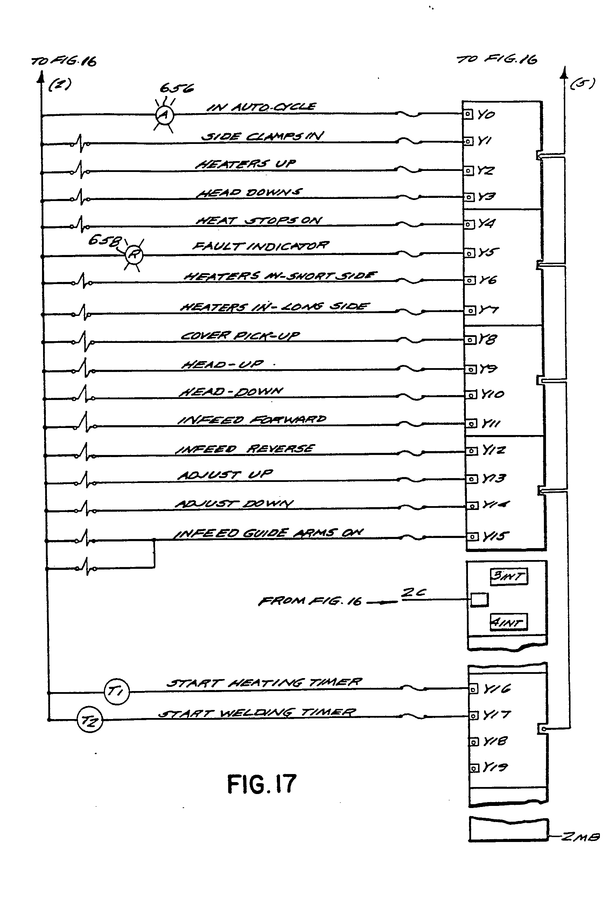

Turning now to FIGURES 15—18 the circuit diagrams of the control system for this invention are set forth. Turning first to FIGURE 15 we see the main control circuit, the main power supply and the temperature controllers for heater blades. In FIGURE 16 the input board from the controller is shown and in FIGURE 17 the output board from the controller is shown. FIGURE 16 also includes the manual override circuit that allows manual operation of the devices.

Turning now to FIGURE 15, supply lines L1, L2 and L3 are connected to a power supply of 240 volt, 3 phase 60 Hz or any other suitable power Hertz power which is connected by means of a main power switch 620. Lines 1L1—1L3 each contain a 20 amp fuse and a transformer 622 is connected across the lines 1L1 and 1L2 to provide the appropriate control voltage for the 5 TI controller and the portion of the circuit including the input and output boards. Three phase current is also supplied to the hydraulic supply motor 594. Control of that motor is provided by start switch 624 and stop switch 626. Start switch 624 is a momentary switch and actuated relay 628 which closes contacts 628a thereby providing a holding circuit around switch 624 to keep the motor running. Likewise, additional contacts 628b, c and d as well as an auxiliary contact 628e are also actuated with the latter serving as part of the switch controlling the master control relay 630. Master control relay 630 has a single contact which will provide power to the input and output boards shown in FIGURES 16 and 17 once the motor is running and once the heaters have been turned on as will be explained hereafter. Overload protection for motor 594 is provided by overload switches and their contacts 632 which are in series with relay 628.

When start switch 624 is actuated it also serves to turn on an amber light 634 and start an hour meter 636.

The heaters are turned on in a similar fashion by a main "on" switch 638 thereby actuating a relay 640 which closes contacts 640a and 640b. Contact 640a serves as a holding circuit around momentary switch 638 whereas contact 640b completes the circuit to the master control relay 630 so that power is supplied to the input and output boards of the controller through contact 630a. Switch 640a also serves to energize light 642 to indicate that the heaters are on. In addition, a heater stop switch 644 is also provided to turn the heaters off. The heater relay 640 additionally has contacts 640c, d and e which serve to contact lines 1L1—1L3 to the four temperature controllers indicated at 646, 648, 650 and 652. Thus, each of the heater bars 532 and the heating assemblies 444 has its temperature separately controllable and each of these temperature controllers 646—652 will be set for a specific temperature which will be controlled by the internal thermocouple indicated by contacts TC. In each of these temperature controllers, terminals LN and L0 are tied together so that power is supplied, for example, in temperature controller 646, via lines 1L3 and 1L2 with power coming in line via terminal LN and across the 600 watt heater 532 via terminal L0 with the connection being completed back to 1L3 via terminals L1 and another is shown for the 240 volt power supply.

Control of this system can be automatic, via the controller or manual via the manual overrides. The input signals for the controller provided by the bottom half of the circuit shown in FIGURE 16 will be generated when the listed condition occurs as the switches are tripped closed. All of the switches are normally open except for those in positions X19 and X20 which signal the condition when the heater and clamp assemblies are pivoted outwardly away from contact with the jar and cover. These switches are normally closed switches. The outputs to control the solenoids and the respective pneumatic hydraulic manifolds are controlled according to the circuit set forth in FIGURE 17. The positions X0—X15 in the input board in FIGURE 16 set forth manual override switches for manually operating the welding apparatus through its various cycles. Control between automatic sequencing and manual sequencing is provided by the mode selection switch 654.

Turning first to the inputs on the lower portions of FIGURE 16, the first position at X15 corresponds to the signal generated at the end of the dwell time for heating which is provided by an adjustable timer T1 shown in FIGURE 17. At the next position X16 is the output from time T2 which indicates the end of that welding time dwell period and this again is an adjustable time that can be varied to control the amount of time the apparatus is held in the position shown in FIGURE 14G. At the next positions X17 and X18, limit switches 286 and 284, respectively, indicate the position of the carriage assembly in its forward or back position and comparable outputs to microswitches 170 and 172 are provided by the solenoids at positions Y11 and Y12 on the output board shown in FIGURE 17.

At the next position on the input board X19 in FIGURE 16 there are four limit switches 602—608 which indicate the position of cylinders 398—404. As indicated previously, these switches are normally closed and when the cylinders 398—404 are actuated by an output from position Y1 on FIGURE 17 switches 602—608 will be open. When the clamps are again pivoted out of position, switches 602—608 will close generating the input signal at X19 indicating the clamps have been in fact pivoted away from the jar.

At the next position X20, a similar set of limit switches 610—616 are employed for the heaters but as shown in FIGURE 17 control over the actuation of the heater groups the cylinders 406—412 into two pairs as indicated at output positions Y6 and Y7. Heaters on the short side, specifically controlled by cylinders 406 and 410, are grouped together and the heaters on the long side, controlled by cylinders 408 and 412, are grouped together. When the heaters have been pivoted "in" to their operating position the normally closed swithces 620—616 will be open and when the heaters are out away from the jar, switches 610—616 will be closed.

Movement of the heaters up and down is controlled by hydraulic cylinder 414 with output coming from position Y2 on FIGURE 17 and when the heaters are moved down, limit switch 600 will tripped closed to generate an input signal at position X21.

Turning to the next two input positions X22 and X23 they respectively refer to inputs from the use of the clearance cylinder 338. This is a dual position cylinder and as is indicated from the output board at positions Y9 and Y10 two separate solenoids are used to provide the desired up and down control. Limit switches 368 and 370, respectively, indicate when the welding head is "down" or "up" and as was indicated previously the ead would move down at the beginning of the cyclce and will be raised at the end of the cycle merely to allow clearance beneath the welding head for outgoing and incoming jars and their covers. In between these two periods cylinder 338 is not actuated.

The cover pickup cylinder 570 is provided with one internal red switch indicated in FIGURE 16 at RS1 to indicate when the pickup cylinder is in its "down" position at which point the cover has been released. Pickup cylinder is controlled by an output signal from the Y8 position on FIGURE 17 and will be controlled by its own separate solenoid located with the pneumatic manifold 124.

The next three positions on the input controller X26—X28 relate relate to the limit switches 170, 172 and 174 on plate 160 for respectively indicating that battery jars are either in the load station, the weld station or the unload station. We have found it is desirable to not permit the transfer carriage assembly 106 to return to its initial position immediately after having fed a new battery jar to the weld station and removed a finished welding jar to the unload station. Also, return is not permitted unless the arms have been folded back to their "in" positions nor until the unload station has been cleared of a battery jar. Other arrangements could, however, be built into the system if a different mode of operation was desired.

Finally, at position X29 two limit switches 252 and 268 are used to indicate to the controller when the arms on the carriage are back in their "in" position when those two switches have been closed.

Returning once again to the output board in FIGURE 17 and Y0 position will produce an output signal to turn on light 656 indicating the controller is in its automatic cycle sequence. Positions Y1 and Y2 have already been described. Position Y3 relates to the output to the solenoid controlling cylinder 348 which is the main cylinder controlling the actuation of the welding head assembly 108 during the heating and welding cycles. Likewise, the next position at Y4 relates to the output for the solenoid controlling actuation of the heat stop cylinders 346 and 350 that control the downward movement of the welding head assembly 108 by cylinder 348 during the heating cycle. The output at position Y5 generates an indication of a fault and serves to light a red lamp 658 to indicate that condition. Such a fault condition will occur if the height of the jar is outside the acceptable range of any particular sequence of jars. In that instance, the welding heating sequence would be held up. At positions Y11 and Y12 outputs are provided for solenoids controlling the movement of the transfer carriage assembly 106 and in particular actuation of hydraulic cylinder 270. At output positions Y13 and Y14 outputs are provided for the solenoids that control hydraulic motor 322 in control of the jack assembly 320. At output position Y15 an output signal is produced to control the actuation of cylinders 244 and 264.

As an exemplary program, Table 1 is provided which sets forth a program listing for a typical program controlling the operation of the welding apparatus including the communication of the data, the control and operation of relays or solenoids and the appropriate control of contacts. This program listing would be used with the 5TI 2000 programmer in order to establish the control sequence that the controller will operate under.

It should be pointed out, with reference to FIGURE 18, that during the heating step beads of thermoplastic material are formed both exteriorly and interiorly as shown. Thus, during the pressure step as shown in FIGURE 14G, these beads continue to be formed or enlarged with the gap between the skirt and the interior surface of the battery jar providing a flow path along which these beads can pass so that the degraded material can be completely removed from between the weld surfaces. In addition, the heating not only creates the primary horizontal weld surface between surfaces 46 and 116 of the cover and battery jar respectively, but the flowing of thermoplastic material passed surface 42 and in contact with the melted portion of the guide posts 36 forms a second and vertical weld between the cover skirt 38, guide posts 36 and the interior surface 114 of battery jar 110. This homogeneous weld area is shown in phantom in FIGURE 19 and will provide an extremely strong joint between cover 10 and battery jar 110. Pursuant to the above procedures, we have found that we can obtain stronger joints that have an area relatively larger than the thickness of the sidewall so that the joint is not weaker than the tensile strength of that sidewall. We have obtained a joint that is more reliably welded and because of the guidance and alignment capability provided by guide posts or pins 36 during and prior to the point of contact of surfaces 46 and 116 following heating, we can achieve better control over the welding process. Further, because of the gap existing between surface 42 and the interior surface 114, we can use what would otherwise be wasted extruded material in order to form a second vertical weld between those surfaces. The presence of guide posts or pins 36 also allows the ability to work with distorted battery jars which will become more of a problem as the sidewall thicknesses of battery jars are decreased.

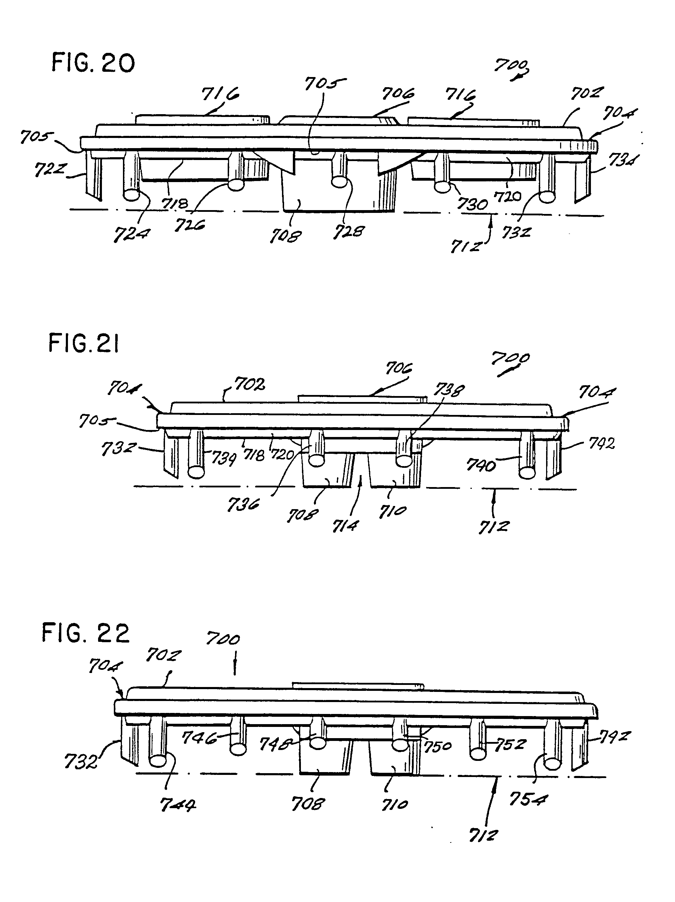

Turning first to FIGURES 20 and 21, an alternative cover is generally indicated at 700 and is comprised of a main plate member 702. The cover is provided with a depending rim portion, generally indicated at 704, although plate member 702 could also be formed as a substantially flat plate.

Cover 700 is provided with a centrally positioned vent hole, generally indicated at 706, which is provided with depending skirt portions 708 and 710, the bottom of which defines a horizontal plane indicated at 712. A gap 714 is provided between skirt portions 708 and 710 so that the vent hole 706 can collect gases which may accumulate within the battery during its use.

Cover 700 is also provided with a plurality of additional openings indicated at 716, so that terminal posts from electrodes that will subsequently be positioned within the battery jar can extend through cover 700.

Depending downwardly from the bottom surface of cover 700 and extending about the periphery thereof, is a flange or skirt member generally indicated at 718. The height of this skirt member from the bottom surface of the edge portion number 700 is about 2.36 cm and is provided with a front or exterior surface 720 having about a 1 degree taper and a rear surface (not shown) which has about a 3 degree taper with this tapered condition being present to facilitate demolding.

With reference now to FIGURE 20, a plurality of guide posts or pins also depend from the bottom surface of rim 704 with these guide pins being indicated at 722—734. The guide pins 722—734 are preferably located at spaced apart locations about the periphery of the cover with the spacings being about 2.54 cm along each side. The spacing therebetween the pins at the corners lying on opposite sides may be less than about 2.54 cm. Together guide pins 722—734 and the flange and skirt member 718 form a continuous member which extends about the periphery of the bottom edge of the outer portion of cover 700. While guide posts 722—734 can be placed about 2.54 cm apart, the exact spacing between them can be greater or lesser, it only being important that they be spaced close enough together so as to both straighten the upper edge or rim of the battery jar as the cover is placed thereon as the pins are inserted into the battery jar and so that the sidewalls will not be rippled when the cover and the pins are in place. Likewise, it is also important that enough pins be used to provide sufficient camming action during insertion to cure any bowing problems that may be present in the sidewalls of the battery jar.

The length of corner pins 722, 724, 732 and 734, respectively, as shown in FIGURE 20, have a length of approximately 1.9 cm and are provided with sloped bottom surfaces, having a taper of approximately 30 degrees although greater or lesser amounts of taper could be employed as this surface really serves as a guide to help insert the guide pins into the battery jar.

The next guide pins positions along the side shown in FIGURE 20, specifically pins 726 and 730, are shorter and have a length of approimately 1.57 cm inches whereas the central most guide pin 728 is shorter yet and has a length of about 1.27 cm.

As shown in FIGURES 20 and 21, plane 712 established by the bottom of skirts 708 and 710 lies below the bottom of the longest guide pins 722, 724, 732 and 734. When these pins are about 1.9 cm in length, a gap of about .51 cm exists between these pins and plane 712. Thus, the corner pins could be .51 cm longer with the cover still being equally as stackable for shipping purposes as if the cover had a flat upper surface. Alternatively, for the structure shown in FIGURE 20, the length of these corner posts could also be extended by an extra distance equal to the depth of the recessed outer edge indicated at 705. In any event, it is only desirable to have the corner pins relatively longer and the more centrally located pins along each side shorter so as to insure proper initial placement of cover 700 within a battery jar.

In FIGURE 21 which shows the length of the cover shown in FIGURE 20 the centrally located pins on this side, indicated at 736 and 738, have a length of about 1.27 cm which are equal in length to the most centrally located pin 728 shown in FIGURE 20.

In FIGURE 22, a longer battery cover is shown with six guide pins being employed on one side instead of four as shown in FIGURE 21. These guide pins are indicated by reference numerals 744—754. The outer or corner guide pins 744 and 754 have a length of about 1.9 cm whereas the next most inward guide pins 746 and 752, have a length of about 1.57 cm with guide pins 748 and 750 located in the central portion of the side have a length of 1.27 cm similar to the centrally positioned guide pins 736, 738 and 728 in the first embodiment shown in FIGURES 20 and 21.

The cover can be welded into place within a battery jar in accordance with the method and apparatus disclosed hereinabove. In this regard it is important to note that the shortest pins, namely those located in the center of each side, need only be longer than the height to which cover 700 is raised upwardly out of the battery jar during the welding operation. This will assure that those particular guide pins will not be removed from engagement with the interior surface of the battery jar sidewall so that following the heating cycle the cover can be easily and quickly reinserted without losing the desired registry between the pins and the sidewalls of the battery jar established following their initial insertion into that battery jar

Table 1

5TI PROGRAM LISTING

HARDIGG #1 COVER WELDER E-106

| Address | Contents | Address | Contents |
|---|---|---|---|
| 0 | STR-NOT X28 | 42 | OR STR |
| 1 | AND X18 | 43 | AND CR1 |
| 2 | AND X6 | 44 | STR Y11 |
| 3 | AND X0 | 45 | OR NOT X28 |
| 4 | OUT CRO | 46 | AND CR101 |
|  |  | 47 | AND X14 |
| 5 | STR X18 | 48 | OR STR |
| 6 | AND Y0 | 49 | AND X22 |
| 7 | OR CRO | 50 | OUT Y11 |
| 8 | AND X1 |  |  |
| 9 | AND X6 | 51 | STR CR101 |
| 10 | OUT Y0 | 52 | AND X13 |
|  |  | 53 | OR Y16 |
| 11 | STR CR1 | 54 | STR X29 |
| 12 | OR Y0 | 55 | OR X18 |
| 13 | AND-NOT CR100 | 56 | AND STR |
| 14 | AND X1 | 57 | AND-NOT X26 |
| 15 | OUT CR1 | 58 | AND-NOT Y11 |
|  |  | 59 | OUT Y12 |
| 16 | STR X16 |  |  |
| 17 | AND CR15 | 60 | STR X17 |
| 18 | STR CR101 | 61 | STR X17 |
| 19 | AND CR15 | 62 | TMR |
| 20 | AND X12 | 63 | 10 |
| 21 | OR STR | 64 | 10 |
| 22 | OR NOT X1 | 65 | OUT CR16 |
| 23 | OR CR100 |  |  |
| 24 | AND-NOT Y10 | 66 | STR X20 |
| 25 | OUT Y9 | 67 | AND-NOT Y6 |
|  |  | 68 | AND X25 |
| 26 | STR-NOT CR1 | 69 | AND-NOT Y8 |
| 27 | AND-NOT X6 | 70 | OUT CR2 |
| 28 | OUT CR101 | 71 | AND X19 |
|  |  | 72 | AND-NOT Y1 |
| 29 | STR X28 | 73 | OUT CR15 |
| 30 | OR NOT X17 |  |  |
| 31 | AND CR1 | 74 | STR CR15 |
| 32 | AND Y15 | 75 | AND CR16 |
| 33 | STR CR101 | 76 | STR Y10 |
| 34 | AND X14 | 77 | AND-NOT X16 |
| 35 | OR STR | 78 | OR STR |
| 36 | OR X18 | 79 | AND CR1 |
| 37 | OUT Y15 | 80 | STR CR101 |
|  |  | 81 | AND X11 |
| 38 | STR-NOT X28 | 82 | AND CR15 |
| 39 | AND X18 | 83 | OR STR |
| 40 | STR-NOT Y12 | 84 | OUT Y10 |
| 41 | AND Y11 |  |  |

Table 1 (contd)

5TI PROGRAM LISTING

HARDIGG #1 COVER WELDER E-106

| Address | Contents | Address | Contents |
|---|---|---|---|
| 85 | STR Y17 | 129 | AND CR1 |
| 86 | STR Y17 | 130 | STR CR101 |
| 87 | TMR | 131 | AND X2 |
| 88 | 50 | 132 | OR STR |
| 89 | 50 | 133 | OUT Y3 |
| 90 | OUT CR14 | | |
| | | 134 | STR CR1 |
| 91 | STR Y10 | 135 | AND-NOT X25 |
| 92 | AND X23 | 136 | AND-NOT Y17 |
| 93 | STR Y1 | 137 | STR CR101 |
| 94 | AND-NOT X16 | 138 | AND X3 |
| 95 | OR STR | 139 | OR STR |
| 96 | AND CR1 | 140 | OUT Y4 |
| 97 | STR CR101 | | |
| 98 | AND X9 | 141 | STR-NOT X25 |
| 99 | OR STR | 142 | STR CR1 |
| 100 | AND X27 | 143 | AND-NOT X25 |
| 101 | AND X1 | 144 | TMR |
| 102 | OUT Y1 | 145 | 10 |
| | | 146 | 10 |
| 103 | STR Y1 | 147 | OUT CR6 |
| 104 | STR Y1 | | |
| 105 | TMR | 148 | STR CR13 |
| 106 | 5 | 149 | STR CR13 |
| 107 | 5 | 150 | TMR |
| 108 | OUT CR3 | 151 | 4 |
| | | 152 | 4 |
| 109 | TMR | 153 | OUT CR7 |
| 110 | 5 | | |
| 111 | 5 | 154 | STR CR1 |
| 112 | OUT CR4 | 155 | AND CR6 |
| | | 156 | STR CR101 |
| 113 | STR CR1 | 157 | AND-NOT X7 |
| 114 | AND CR4 | 158 | OR STR |
| 115 | AND-NOT CR14 | 159 | OUT CR13 |
| 116 | AND-NOT X16 | | |
| 117 | STR CR101 | 160 | STR CR6 |
| 118 | AND X10 | 161 | AND-NOT Y17 |
| 119 | OR STR | 162 | STR CR101 |
| 120 | AND X1 | 163 | AND-NOT X7 |
| 121 | OUT Y8 | 164 | OR STR |
| | | 165 | AND X1 |
| 122 | STR CR3 | 166 | OUT Y6 |
| 123 | AND X25 | | |
| 124 | AND-NOT X15 | 167 | STR CR7 |
| 125 | STR Y17 | 168 | AND Y6 |
| 126 | AND X20 | 169 | OUT Y7 |
| 127 | OR STR | | |
| 128 | OR CR8 | | |

# EP 0 144 569 B1

Table 1 (contd)  ·  5TI PROGRAM LISTING

HARDIGG #1 COVER WELDER E-106

| Address | Contents | Address | Contents |
|---|---|---|---|
| 170 | STR Y7 | 212 | STR CR101 |
| 171 | STR CR1 | 213 | AND X4 |
| 172 | TMR | 214 | AND-NOT X5 |
| 173 | 4 | 215 | OUT Y13 |
| 174 | 4 | | |
| 175 | OUT Y16 | 216 | STR CR101 |
| | | 217 | AND X5 |
| 176 | STR Y16 | 218 | AND-NOT X4 |
| 177 | STR-NOT X15 | 219 | OUT Y14 |
| 178 | TMR | | |
| 179 | 5 | | |
| 180 | 5 | | |
| 181 | OUT CR8 | | |
| 182 | STR X15 | | |
| 183 | STR CR1 | | |
| 184 | TMR | | |
| 185 | 10 | | |
| 186 | 10 | | |
| 187 | OUT CR9 | | |
| 188 | TMR | | |
| 189 | 10 | | |
| 190 | 10 | | |
| 191 | OUT Y17 | | |
| 192 | STR CR1 | | |
| 193 | AND Y16 | | |
| 194 | AND-NOT CR9 | | |
| 195 | STR CR101 | | |
| 196 | AND X8 | | |
| 197 | OR STR | | |
| 198 | AND X1 | | |
| 199 | OUT Y2 | | |
| 200 | STR X16 | | |
| 201 | AND X22 | | |
| 202 | STR-NOT CR1 | | |
| 203 | AND CR0 | | |
| 204 | OR STR | | |
| 205 | OUT CR99 | | |
| 206 | STR-NOT CR99 | | |
| 207 | STR-NOT CR99 | | |
| 208 | TMR | | |
| 209 | 5 | | |
| 210 | 5 | | |
| 211 | OUT-NOT CR100 | | |

While the invention has been described in connection with what is presently conceived to be the most practical and preferred embodiment, it is to be understood that the invention is not to be limited to the disclosed embodiment.

## Claims

1. Apparatus for welding a battery jar cover (10; 700) onto the rim portion of a battery jar (110) wherein the cover (10; 700) has a guide structure (34) engagable with the inner surface (114) of the jar (110) to locate the cover (10; 700) on the jar (110), the apparatus comprising a weld head assembly (108) for moving the cover (10; 700) and jar (110) relative to one another by an amount less than the length of the guide structure (34) such that the engagement between the guide structure (34) and the inner surface (114) of te jar (110) is maintained both for separating opposed complementary welding surfaces (46; 705; 116) of the cover (10; 700) and jar (110) for direct heating by heating means (444) and for bringing the heated welding surfaces

18

(46; 705; 116) together to effect a joint therebetween characterised in that the weld head assembly (108) comprises clamp means (420) for engaging the sides of the jar (110) and rail means (550) for engaging the periphery of the top of the cover (10; 700) to maintain the alignment between the complementary welding surfaces (46 705; 116) and to apply pressure to the area of the joint between the heated welding surfaces (46; 705; 116).

2. Apparatus according to Claim 1 characterised in that the clamp means (420) comprises a separate pivotally mounted clamp assembly (420) positioned along each side of the jar (110) for engagement therewith.

3. Apparatus according to Claim 2 characterised in that the heating means (444) comprises a separate pivotally mounted heater assembly (444) positioned along each side of the jar (110) for location between the welding surfaces (46; 705; 116).

4. Apparatus according to Claim 3 characterised in that the clamp and heater assemblies (420; 444) on each side of the jar (110) are combined in a clamp and heater assembly (396) in which the heater assembly (444) is movable independently of the clamp assembly (420).

5. Apparatus according to Claim 4 characterised in that the clamp and heater assemblies (396) are arranged in two opposing pairs.

6. Apparatus according to Claim 5 characterised in that one pair of clamp and heater assemblies (396) lies within the area defined between the other pair of clamp and heater assemblies (396) and is preferably adjustable to vary the gap therebetween.

7. Apparatus according to Claim 5 or Claim 6 characterised in that one pair of clamp and heater assemblies (396) is of shorter length than the other pair of clamp and heater assemblies (396).

8. Apparatus according to any one of Claims 4 to 7 characterised in that each clamp and heater assembly (396) includes a clamp bar (486) pivotal towards and away from the adjacent side of the jar (110) and a heater blade (532) pivotal towards and away from the joint area and vertically movable with respect to the joint area.

9. Apparatus according to Claim 8 characterised in that each heater blade (532) is arranged for vertical movement independently of the pivotal movement.

10. Apparatus according to any one of the preceding Claims characterised in that the rail means (550) comprises a separate rail member (550) positioned along each edge of the cover (10; 700) for engagement with the top of the periphery thereof.

11. Apparatus according to any one of the preceding Claims characterised in that the weld head assembly (108) includes pick-up means (568) for locking the cover (10; 700) to the weld head assembly.

12. Apparatus according to Claim 11 characterised in that the pick-up means (568) comprises a split sleeve member (574) having a plurality of resilient arms (578) for engaging releasably an opening (16; 706) in the cover (10; 700).

13. Apparatus according to Claim 12 characterised in that the sleeve member (574) is resiliently biassed by spring means (585) towards a pre-determined lower position for reception of the arm (578) within the opening (16; 706) and is movable against the biassing for securing the cover (10; 700) in engagement with the rail means (550).

14. Apparatus according to any one of the preceding Claims characterised in that a transfer carriage (106) is provided to move sequentially battery jars (110) and the associated covers (10; 700) from a load station to a weld station and onto an unload station.

**Patentansprüche**

1. Vorrichtung zum Schweißen eines Batteriegehäusedeckels (10; 700) auf den Randbereich eines Batteriegehäuses (110), wobei der Deckel (10; 700) eine Führungsstruktur (34) aufweist, die mit der inneren Oberfläche (114) des Gehäuses (110) zusammenwirken kann, um den Deckel (10; 700) auf dem Gehäuse (110) auszurichten, wobei die Vorrichtung einen Schweißkopfträger (108) zur Bewegung des Deckels (10; 700) und des Gehäuses (110) relativ zueinander umfaßt, wobei die Relativbewegung geringer ist als die Länge der Führungsstruktur (34), so daß der Eingriff zwischen der Führungsstruktur (34) und der inneren Oberfläche (114) des Gehäuses (110) aufrechterhalten wird, sowohl während der Trennung der entgegengesetzten einander gegenüberliegenden Schweißoberflächen (46; 705; 116) des Deckels (10; 700) und des Gehäuses (110) für die direkte Erhitzung durch eine Heizvorrichtung (444) als auch während des Zusammenbringens der erhitzten Schweißoberflächen (46; 705; 116), mit dem die Verbindung der beiden bewirkt wird, dadurch gekennzeichnet, daß der Schweißkopfträger (108) Klemmvorrichtungen (420) aufweist, um die Seiten des Gehäuses (110) festzuhalten, und daß Schieneneinrichtungen (550) vorgesehen sind, um den Rand der Oberseite des Deckels (10; 700) festzuhalten, um die gegenseitige Ausrichtung zwischen den entgegengesetzten Schweißoberflächen (46; 705; 116) aufrechtzuerhalten, und gleichzeit auf den Bereich der Verbindung zwischen den erhitzten Schweißoberflächen (46; 705; 116) Druck auszuüben.

2. Vorrichtung nach Anspruch 1, dadurch gekennzeichnet, daß die Klemmvorrichtung (420) eine getrennte, schwenkbar montierte Klemmanordnung (420) umfaßt, die entlang einer jeden Seite des Gehäuses (110) angebracht ist, um dieses festzuhalten.

3. Vorrichtung nach Anspruch 2, dadurch gekennzeichnet, daß die Heizvorrichtung (444) eine getrennte schwenkbar montierte Heizanordnung (444) umfaßt, die entlang einer jeden Seite des Gehäuses (110) angeordnet ist, um zwischen die zu verschweißenden Oberflächen (46; 705; 116) gebracht werden zu können.

4. Vorrichtung nach Anspruch 3, dadurch gekennzeichnet, daß die Klemm- und Heizanordnungen (420; 444) auf jeder Seite des Gehäuses (110) in einer Klemm- und Heizanordnung (396) zusammengefaßt sind, in der die Heizanordnung (444) unabhängig von der Kemmanordnung (420) beweglich ist.

5. Vorrichtung nach Anspruch 4, dadurch gekennzeichnet, daß Klemm- und Heizanordnung (396) in zwei einander gegenüberliegenden Paaren angeordnet sind.

6. Vorrichtung nach Ansruch 5, dadurch gekennzeichnet, daß ein Paar Klemm- und Heizanordnungen (396) innerhalb eines Bereiches liegt, der begrenzt wird durch das andere Paar von Klemm- und Heizanordnungen (396) und vorzugsweise einstellbar ist, um den Abstand dazwischen zu verändern.

7. Vorrichtung nach Anspruch 5 oder 6, dadurch gekennzeichnet, daß ein Paar Klemm- und Heizanordnungen (396) kürzer ist als das andere Paar von Klemm- und Heizanordnungen (396).

8. Vorrichtung nach einem der Ansprüche 4 bis 7, dadurch gekennzeichnet, daß jede Klemm- und Heizanordnung (396) einen Klemmbügel (486) umfaßt, der auf die benachbarte Seite des Gehäuses hin- und von dieser wegschwenkbar ist und weiter eine Heizkinge (532) umfaßt, die auf die Schweißfläche zu- und von dieser wegschwenkbar ist, und die gleichzeitig vertikal im Bezug auf die Schweißfläche beweglich ist.

9. Vorrichtung nach Anspruch 8, dadurch gekennzeichnet, daß jede Heizklinge (532) so angeordnet ist, daß sie unabhängig von der Schwenkbewegung vertikal bewegt werden kann.

10. Vorrichtung nach einem der vorhergehenden Ansprüche, dadurch gekennzeichnet, daß die Schienenvorrichtung (550) ein getrenntes Schienenglied (550) umfaßt, das entlang einer jeden Kante des Deckels (10; 700) angeordnet ist, um mit der Oberseite des Randes des Deckels in Eingriff zu gelangen.

11. Vorrichtung nach einem der vorhergehenden Ansprüche, dadurch gekennzeichnet, daß der Schweißkopfträger (108) Aufnahmevorrichtungen (568) zum Festsetzen des Deckels (10; 700) an der Kopfträgeranordnung aufweist.

12. Vorrichtung nach Anspruch 11, dadurch gekennzeichnet, daß die Aufnahmevorrichtung (568) eine geteilte Hülse (574) umfaßt, die eine Vielzahl von federnden Armen (578) aufweist, um damit eine Öffnung (16; 706) in dem Deckel (10; 700) lösbar festzuhalten.

13. Vorrichtung nach Anspruch 12, dadurch gekennzeichnet, daß die Hülse (574) durch Federn (585) in Richtung auf eine vorbestimmte niedrigere Stellung zur Aufnahme der Arme (578) in die Öffnung (16; 706) elastisch vorgespannt ist und gegen die Vorspannung zur Sicherung des Deckels beweglich ist, während er durch die Schienenvorrichtung (550) fixiert wird.

14. Vorrichtung nach einem der vorhergehenden Ansprüche, dadurch gekennzeichnet, daß ein Transportwagen (106) vorgesehen ist, der der Reihe nach Batteriegehäuse (110) und die zu geordneten Deckel (10; 700) von einer Ladestation zu einer Schweißstation und weiter zu einer Entladestation bewegt.

**Revendications**

1. Machine pour souder un couvercle de bac d'accumulateur (10, 700) sur le bord d'un bac d'accumulateur (110), das laquelle le couvercle (10, 700) comporte une structure de guidage (34) pouvant s'engager dans la surface intérieure (114) du bac (110) afin de postionner le couvercle (10, 700) sur le bac (110), la machine comprenant une tête de soudage (108) pour déplacer le couvercle (10, 700) et le bac (110) l'un par rapport à l'autre sur une distance inférieure à la longueur de la structure de guidage (34) de façon à ce que le contact entre la structure de guidage (34) et la surface intérieure (114) du bac (110) soit maintenue à la fois pour séparer les surfaces de soudure opposées complémentaires (46, 705, 116) du couvercle (10, 700) et du bac (110) en vue du chauffage direct par un moyen de chauffage (444) et pour amener les surfaces de soudure chauffées (46, 705, 116) l'une contre l'autre afin de réaliser un joint entre elles, caractérisée en ce que la tête de soudage (108) comprend un moyen de fixation (420) destiné à venir au contact des côtés du bac (110) et un rail (550) pour venir au contact de la périphérie du dessus du couvercle (10, 700) afin de maintenir l'alignement entre les surfaces de soudure complémentaires (46, 705, 116) et d'appliquer une pression à la zone du joint entre les surfaces de soudure chauffées (46, 705, 116).

2. Machine selon la revendication 1, caractérisée en ce que le moyen de fixation (420) comprend un assemblage de fixation (420) séparé et monté à pivot, qui est disposé le long de chaque côté du bac (110) afin de venir en contact avec celui-ci.

3. Machine selon la revendication 2, caractérisée en ce que le moyen de chauffage (444) comprend un assemblage de chauffage séparé monté à pivot (444) disposé le long de chaque côté du bac (110) afin d'être placé entre les surfaces de soudure (46, 705, 116).

4. Machine selon la revendication 3, caractérisée en ce que le moyen de fixation et le moyen de chauffage (420, 444) de chaque côté du bac (110) sont combinés pour former un assemblage de fixation et de chauffage (396) dans lequel l'élément du chauffage (444) peut se déplacer indépendamment du moyen de fixation (420).

5. Machine selon la revendication 4, caractérisée en ce que les assemblages de fixation de chauffage (396) sont disposés sous forme de deux paires opposées.

6. Machine selon la revendication 5, caractérisée en ce qu'une paire d'assemblages de fixation et de chauffage (396) est située dans la zone définie entre l'autre paire d'assemblages de fixation et de chauffage (396) et peut être réglée, de préférence, afin de modifier le jeu entre ceux-ci.

7. Machine selon la revendication 5 ou 6, caractérisé en ce qu'une paire d'assemblages de fixation et de chauffage (396) présente une plus faible longueur que l'autre paire d'assemblages de fixation et de chauffage (396).

8. Machine selon l'une quelconque des revendications 4 à 7, caractérisée de ce que chaque assemblage de fixation et de chauffage (396) comprend une barre de fixation (486) pouvant pivoter vers et en s'écartant du côté voisin du bac (110) et une lame de chauffage (532) pouvant pivoter vers et en s'écartant de la zone du joint et pouvant se déplacer verticalement par rapport à la zone de joint.

9. Machine selon la revendication 8, caractérisée en ce que chaque lame de chauffage (532) est disposée pour permettre son mouvement vertical indépendamment du mouvement de pivotement.

10. Machine selon l'une quelconque des revendications précédentes, caractérisée en ce que le rail (550) comprend un élément de rail séparé (550) disposé le long de chaque bord du couvercle (10, 700) afin de venir en contact avec le dessus de la périphérie de celui-ci.

11. Machine selon l'une quelconque des revendications précédentes, caractérisé en ce que la tête de soudage (108) comprend un moyen de saisie (568) pour verrouiller le couvercle (10, 700) sur la tête de soudage.

12. Machine selon la revendication 11, caractérisée en ce que le moyen de saisie (568) comprend un élément de manchon fendu (574) présentant plusieurs bras élastiques (578) destinés à venir en contact amovible avec un orifice (16, 706) dans le couvercle (10, 700).

13. Machine selon la revendication 12, caractérisée en ce que l'élément de manchon (574) est poussé élastiquement par le ressort (585) vers une position inférieure prédéterminée afin de recevoir les bras (578) dans l'orifice (16, 706) et qui peut se déplacer contre cette force afin de fixer le couvercle (10, 700) en contact avec le rail (550).

14. Machine selon l'une quelconque des revendications précédentes, caractérisée en ce qu'il est prévu un chariot de transfert (106), destiné à déplacer successivement les bacs d'accumulateur (110) et les couvercles correspondants (10, 700) d'un poste de chargement, jusqu'à un poste de soudage, puis à un poste de déchargement.

FIG. 1

FIG. 2

FIG. 3

FIG. 4

2

FIG. 5

FIG. 6

FIG. 7

EP 0 144 569 B1

5

FIG. 8

FIG. 9

FIG. 9A

FIG. 13

FIG. II

FIG. 10

FIG. 12B

FIG. 12A

FIG. 14A

COVER

CONTAINER

550

486

FIG. 14B

550

486

FIG. 14C

550

532

486

FIG. 14D

550

532

486

FIG. 14E

550

532

486

FIG. 14F

550

532

486

FIG. 14G

550

486

FIG. 14H

550

486

FIG. 15

EP 0 144 569 B1

FIG. 16

FIG.17

FIG.19            FIG.18

FIG. 20

FIG.21

FIG. 22